(19) Europäisches Patentamt
European Patent Office
Office européen des brevets

(11) **EP 1 876 206 A1**

(12) **EUROPEAN PATENT APPLICATION**
published in accordance with Art. 153(4) EPC

(43) Date of publication:
**09.01.2008 Bulletin 2008/02**

(51) Int Cl.:
*C08L 69/00* [(2006.01)]   *C08L 51/04* [(2006.01)]
*C08L 67/02* [(2006.01)]   *C08K 5/521* [(2006.01)]

(21) Application number: **06731911.1**

(22) Date of filing: **14.04.2006**

(86) International application number:
**PCT/JP2006/307975**

(87) International publication number:
**WO 2006/118007 (09.11.2006 Gazette 2006/45)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.04.2005 JP 2005132904**
**10.03.2006 JP 2006066646**
**20.03.2006 JP 2006077596**

(71) Applicant: **Techno Polymer Co., Ltd.**
**Tokyo 104-0041 (JP)**

(72) Inventors:
• **UEJIMA, Toshifumi**
**c/o Techno Polymer Co., Ltd.**
**Chuo-ku Tokyo 1040041 (JP)**

• **ISHIKAWA, Koji**
**c/o Techno Polymer Co., Ltd.**
**Chuo-ku Tokyo 1040041 (JP)**
• **HIGASHIJIMA, Toshiyuki**
**c/o Techno Polymer Co.**
**Chuo-ku Tokyo 1040041 (JP)**
• **SUGINO, Shigeki**
**c/o Techno Polymer Co., Ltd.**
**Chuo-ku Tokyo 1040041 (JP)**

(74) Representative: **TBK-Patent**
**Bavariaring 4-6**
**80336 München (DE)**

(54) **THERMOPLASTIC RESIN COMPOSITION AND MOLDING THEREOF**

(57)   The objective of the present invention is to provide a thermoplastic resin composition excelling in translucency, impact resistance, heat resistance and fluidity, particularly a thermoplastic resin composition that in the production of thermoplastic resin molded items through extrusion processing, molding processing, etc., permits a wide tolerance range of processing conditions, such as low susceptibility to quality deterioration by thermal history, excelling in translucency, impact resistance, heat resistance and fluidity; and a molding thereof. The present composition comprises a rubber-reinforced resin consisting of a rubber-reinforced copolymeric resin obtained by polymerization of a vinyl-based monomer including an aromatic vinyl compound in the presence of a rubbery polymer having refractive index in the range from 1.520-1.580, or a mixture of this rubber-reinforced copolymeric resin and a (co)polymer of the above vinyl-based monomer, and a polycarbonate resin in specified ratio, and further comprises a phosphoric compound.

**EP 1 876 206 A1**

**Description**

[Technical Field]

The present invention relates to a thermoplastic resin composition excellent in translucency, impact resistance, heat resistance and fluidity and to a molded article using the composition.

Additionally, the present invention relates to a thermoplastic resin composition that permits a wide tolerance range of processing conditions, such as low susceptibility to qualify deterioration by thermal history and is excellent in translucency, impact resistance, heat resistance and fluidity in manufacturing a molded article and to a molded article using the composition.

[Background Art]

Transparent or translucent molded articles of various thermoplastic resins are used for the purpose of imparting decorativeness of a lighting system including a lamp or the like, a display unit including a switch or the like, and the like. For example, in order to realize the so-called "illumination" with a light source such as a lamp and a transparent or translucent molded article are used in combination, a suitable translucent and illuminated molded article that is not transparent and opaque is sometimes required.

Polycarbonate resin has a superior transparency, a heat resistance and mechanical properties, but has a characteristic where impact resistance is remarkably reduced because of its sensitivity against notch sensibility when the molded article is damaged. Therefore, when a light scattering agent is added to impart translucency, there is a case where impact resistance is deteriorated. In spite of being excellent in heat resistance, a molding temperature is required to be higher. It is sometimes unsuitable for a production of a large-scale molded article.

Further, an ABS-based resin such as acrylonitrile·butadiene·styrene resin is a balanced molding material in moldability, impact resistance, dimensional stability and the like and is widely used in a motor vehicle, a home electric appliances, a housing of an OA equipment and the like. There is an ABS-based resin where transparency is improved by controlling components. However, heat resistance of this ABS-based resin is not sufficient. A polymer alloy wherein the ABS-based resin is contained with polycarbonate resin to improve impact strength with a notch, moldability and heat resistance is proposed (for example, in JP-B S38-15225). Recently, a polymer alloy using these resins becomes one molding material widely used in a motor vehicle, a housing of an OA equipment and the like, but it is usually opaque and the illumination does not sometimes realize.

On the other hand, JP-A 2004-521968 discloses a thermoplastic resin composition wherein an ABS-based resin wherein a difference between a refractive index of a free rigid phase containing acrylonitrile·styrene copolymer (AS resin) in the ABS-based resin and a refractive index of a graft phase comprising a rubber component constituting the ABS-based resin and an AS resin bound to the rubber component is adjusted so as to be within the range of $\pm$ 0.005, and a polycarbonate resin are mixed.

[Disclosure of the Invention]

[Problems to be solved by the Invention]

Recently, a molding material excellent in translucency, impact resistance and heat resistance is required for particularly a display device indicating a working state and the like in vehicle such as automobile.

According to JP-A 2004-521968, adjusting the refractive indexes of resins constituting an alloy of polycarbonate resin and AS resin is conducted to improve translucency and transparency, however, impact resistance is not sufficient yet. The objective of the present invention is to provide a thermoplastic resin composition which contains a rubber-reinforced resin and an aromatic polycarbonate resin as an essential component, is translucent and is excellent in impact resistance, heat resistance and fluidity, and a molded article.

Additionally, in the case of a composition containing an aromatic polycarbonate resin, when it is in the state of melting for forming, decomposition of the resin sometimes occurs to lead to a lowering of molecular weight and a generation of a foreign substance. These phenomena result further in coloration of the composition, lowering of viscosity and the like, and may not perform a stable forming.

The other objective of the present invention is to provide a thermoplastic resin composition which contains a rubber-reinforced resin, an aromatic polycarbonate resin and a phosphoric compound as an essential component, permits a wide tolerance range of processing conditions, such as low susceptibility to qualify deterioration by thermal history and is excellent in translucency, impact resistance, heat resistance and fluidity in manufacturing a molded article with extrusion, forming and the like, and to the molded article using the composition.

[Means for solving problems]

The present inventors made a keen examination for solving the above problems and found out a molded article which is translucent and is excellent in impact resistance and heat resistance with a specific formation of a rubbery polymer formable of a rubber-reinforced resin in a composition containing essentially the rubber-reinforced resin and an aromatic polycarbonate resin to complete the present invention.

Additionally, the present inventors found out that when a resin composition containing essentially a rubber-reinforced resin, an aromatic polycarbonate resin and a phosphoric compound was subjected to extrusion, forming and the like to form a translucent thermoplastic resin molded article, discoloration of a resultant molded article was suppressed, that is, susceptibility by thermal history was little to permit a wide tolerance range of processing conditions and to improve impact resistance even if the resin composition stayed in an extruder, an molding machine and the like, and that when a resin composition containing further a polyester resin was used, adjusting the translucence was easy and the impact resistance was further improved.

The present invention is as follows.

1. A thermoplastic resin composition characterized by comprising:

[A] rubber-reinforced resin consisting of a rubber-reinforced copolymeric resin (A1) which is obtained by polymerization of a vinyl-based monomer (b) including an aromatic vinyl compound in the presence of a rubbery polymer (a) having a refractive index in the range from 1.520 to 1.580, or a mixture of the rubber-reinforced copolymeric resin (A1) and a (co)polymer (A2) of a vinyl-based monomer (b); and
[B] polycarbonate resin;

wherein contents of the rubber-reinforced resin [A] and the polycarbonate resin [B] based on 100% by mass of the total amount of these resins are in the range from 5% to 60% by mass and in the range from 40% to 95% by mass, respectively.

2. The thermoplastic resin composition according to 1 above,
wherein the rubbery polymer (a) is a styrene·butadiene-based copolymer.

3. The thermoplastic resin composition according to 2 above,
wherein content of a styrene unit constituting the styrene·butadiene-based copolymer is in the range from 10% to 80% by mass based on 100% by mass of the total monomer units.

4. The thermoplastic resin composition according to 2 above,
wherein content of a styrene unit constituting the styrene·butadiene-based copolymer is more than 30% by mass and 80% or less by mass based on 100% by mass of the total monomer units.

5. The thermoplastic resin composition according to 1 above, further comprising a phosphoric compound and content of the phosphoric compound is in the range from 0.01 to 5 parts by mass based on 100 parts by mass of the total of the rubber-reinforced resin [A] and the polycarbonate resin [B].

6. The thermoplastic resin composition according to 5 above,
wherein the phosphoric compound is an organic phosphoric compound represented by the following formula.

$$O=P(OR)_s(OH)_{3-s}$$

(In the formula, each R is independently a hydrocarbon group having carbon atoms of 1 to 30 and s is 1 or 2.)

7. The thermoplastic resin composition according to 1 above, further comprising [C] polyester resin and content of the polyester resin [C] is in the range from 1 to 40 parts by mass based on 100 parts by mass of the total of the rubber-reinforced resin [A] and the polycarbonate resin [B].

8. The thermoplastic resin composition according to 7 above,
wherein the polyester resin [C] is an amorphous polyester resin.

9. The thermoplastic resin composition according to 8 above,
wherein the amorphous polyester resin is a condensate of a dicarboxylate and a diol containing an alkylene glycol having carbon atoms of 2 to 12 and an alicyclic diol.

10. The thermoplastic resin composition according to 9 above,
wherein the alkylene glycol is ethyleneglycol and the alicyclic diol is 1,4-cyclohexane dimethanol.

11. The thermoplastic resin composition according to 7 above, further comprising a phosphoric compound and content of the phosphoric compound is in the range from 0.01 to 5 parts by mass based on 100 parts by mass of the total of the rubber-reinforced resin [A] and the polycarbonate resin [B].

12. The thermoplastic resin composition according to 11 above,
wherein the phosphoric compound is an organic phosphoric compound represented by the following formula.

$$O=P(OR)_s(OH)_{3-s}$$

(In the formula, each R is independently a hydrocarbon group having carbon atoms of 1 to 30 and s is 1 or 2.)

13. A molded article characterized by comprising the thermoplastic resin composition according to 1 above.
14. The molded article according to 13 above,
wherein the thermoplastic resin composition further comprises a phosphoric compound, and
wherein content of the phosphoric compound is in the range from 0.01 to 5 parts by mass based on 100 parts by mass of the total of the rubber-reinforced resin [A] and the polycarbonate resin [B].
15. The molded article according to 13 above,
wherein the thermoplastic resin composition further comprises [C] polyester resin, and
wherein content of the polyester resin [C] is in the range from 1 to 40 parts by mass based on 100 parts by mass of the total of the rubber-reinforced resin [A] and the polycarbonate resin [B].
16. The molded article according to 15 above,
wherein the thermoplastic resin composition further comprises a phosphoric compound, and
wherein content of the phosphoric compound is in the range from 0.01 to 5 parts by mass based on 100 parts by mass of the total of the rubber-reinforced resin [A] and the polycarbonate resin [B].

[Effects of the Invention]

The thermoplastic resin composition of the present invention is excellent in fluidity and the resin composition can lead to a molded article excellent in translucency without formulating a light scattering agent. In addition, this molded article is excellent in impact resistance and heat resistance.
In the case where the rubbery polymer (a) forming the rubber-reinforced resin [A] is a styrene·butadiene-based copolymer, and where content of a styrene unit constituting this styrene·butadiene-based copolymer is in a specified range, translucency, impact resistance and fluidity are excellent.
Additionally, in the case where the thermoplastic resin composition of the present invention is a composition comprising the above-mentioned rubber-reinforced resin [A], polycarbonate resin [B] and polyester resin [C], translucency, impact resistance, heat resistance and fluidity are excellent and adjusting the translucence according to usage and the like is easy.
Further, in the case where the thermoplastic resin composition of the present invention is a composition comprising the above-mentioned rubber-reinforced resin [A], polycarbonate resin [B] and phosphoric compound, fluidity is excellent, susceptibility by thermal history is little in extruding, forming and the like, and a molded article which is excellent in translucency, impact resistance and heat resistance can be stably obtained.
In the case where the phosphoric compound is a compound represented by the above formula, susceptibility by thermal history is particularly little, discoloration of a resultant molded article may be suppressed, and a tolerance range of processing conditions may be widen.
Therefore, a molded article comprising the thermoplastic resin composition of the present invention is excellent in translucency, impact resistance and heat resistance, is easy to transmit a light to impart decorativeness and is preferable as an inner part of vehicle such as automobile.

[Best Mode for Carrying out the Invention]

The invention is described in further detail.
In this specification, "(co)polymer(ize)" means homopolymer(ize) and copolymer(ize), and "(meth)acryl" means acryl and methacryl. Additionally, "refractive index" is a value obtained by fabricating a film having a thickness in the range from 100 to 500 $\mu$m with press molding, and measuring at 25°C by Abbe's refractive index measuring apparatus. Regarding a refractive index of a copolymer, a calculated value obtained with refractive indexes of homopolymers each containing 100% by mass of a unit constituting the copolymer at 25°C can be used.
The thermoplastic resin composition of the present invention (hereinafter, referred to as "the present composition") comprises [A] rubber-reinforced resin (hereinafter, referred to also as "component [A]") consisting of a rubber-reinforced copolymeric resin (A1) which is obtained by polymerization of a vinyl-based monomer (b) including an aromatic vinyl compound in the presence of a rubbery polymer (a) having a refractive index in the range from 1.520 to 1.580, or a mixture of this rubber-reinforced copolymeric resin (A1) and a (co)polymer (A2) of the vinyl-based monomer (b) in an amount from 5% to 60% by mass and [B] polycarbonate resin (hereinafter, referred to also as "component [B]") in an amount from 40% to 95% by mass. It is noted that total of the above-mentioned components [A] and [B] is 100% by mass. The present composition may comprise other component other than the above-mentioned components [A] and [B].

1. Rubber-reinforced resin [A]

This component [A] is consisting of a rubber-reinforced copolymeric resin (A1) which is obtained by polymerization of a vinyl-based monomer (b) including an aromatic vinyl compound in the presence of a rubbery polymer (a) having a refractive index in the range from 1.520 to 1.580, or a mixture of this rubber-reinforced copolymeric resin (A1) and a (co)polymer (A2) of the vinyl-based monomer (b).

The above-mentioned rubbery polymer (a) may be a homopolymer or a copolymer and includes a diene-based polymer and a non-diene-based polymer. Additionally, these may be used alone or in combination. Further, this rubbery polymer (a) may be a non-crosslinked polymer or a crosslinked polymer.

The refractive index of the above-mentioned rubbery polymer (a) depends generally on types and amounts of the units constituting the polymer.

The diene-based rubbery polymer includes a styrene·butadiene-based copolymer such as styrene·butadiene copolymer, styrene·butadiene·styrene copolymer and acrylonitrile·styrene·butadiene copolymer; a styrene·isoprene-based copolymer such as styrene·isoprene copolymer, styrene·isoprene·styrene copolymer and acrylonitrile·isoprene·butadiene copolymer; a hydrogenated polymer of the above-mentioned (co)polymer, and the like.

Each of the above-mentioned copolymer may be a block copolymer or a random copolymer.

The refractive index of the rubbery polymer (a) used for forming the above-mentioned rubber-reinforced copolymeric resin (A1) is in the range from 1.520 to 1.580, preferably from 1.522 to 1.575, more preferably from 1.530 to 1.570, further preferably from 1.535 to 1.565 and particularly from 1.539 to 1.565. If the refractive index is too low, the resultant molded article may be opaque. The above-mentioned rubbery polymer (a) is preferably a styrene·butadiene-based copolymer and a styrene·isoprene-based copolymer, and particularly styrene·butadiene copolymer, styrene·butadiene·styrene copolymer, acrylonitrile·styrene·butadiene copolymer, styrene·isoprene copolymer, styrene·isoprene·styrene copolymer, and acrylonitrile·styrene·isoprene copolymer, and hydrogenated polymers of these polymers (block-type, random-type, or homo-type).

Contents of a unit by styrene and a unit by butadiene or isoprene in the above-mentioned styrene·butadiene-based copolymer and the styrene·isoprene-based copolymer are not particularly limited.

The content of styrene unit is preferably in the range from 10% to 80% by mass, more preferably from 20% to 75% by mass and further preferably from 25% to 65% by mass. If the content of styrene unit is too much, impact resistance may be deteriorated. If the content is too little, on the other hand, the resultant molded article tends to be opaque.

The above-mentioned styrene·butadiene-based copolymer and the styrene·isoprene-based copolymer may be copolymers having styrene unit in an amount from 10% to 30% by mass and may be also copolymers having styrene unit in an amount of more than 30% by mass and 80% or less by mass. In the latter case, the present composition comprising a copolymer having styrene unit preferably from 33% to 70% by mass and more preferably from 35% to 60% by mass leads easily to an opaque molded article.

The gel content of the rubbery polymer (a) is not particularly limited and is generally in the range from 30% to 98%. The volume-average particle diameter of the rubbery polymer (a) is preferably in the range from 80 to 15,000 nm, more preferably from 100 to 15,000 nm, further preferably from 100 to 3,000 nm, much more preferably from 200 to 2,000 nm, and particularly from 500 to 2,000 nm. If the volume-average particle diameter is out of the above range, the impact resistance is sometimes insufficient. The volume-average particle diameter can be measured by a laser diffraction scattering method and the like.

The above-mentioned rubbery polymer (a) is not limited so long as the volume-average particle diameter is in the above range, and one enlarged by a known method such as methods described in JP-A S61-233010, JP-A S59-93701, JP-A S56-167704 and the like may be used.

The above-mentioned vinyl-based monomer (b) may be used one or more of an aromatic vinyl compound, or monomers in combination of one or more of an aromatic vinyl compound and one or more of a compound copolymerizable with the aromatic vinyl compound.

The above-mentioned aromatic vinyl compound is not particularly limited so long as it is a compound having at least one vinyl bond and at least one aromatic ring. The example includes styrene, α-methyl styrene, o-methyl styrene, p-methyl styrene, vinyl toluene, β-methyl styrene, ethyl styrene, p-tert-butyl styrene, vinyl xylene, vinyl naphthalene, monochlorostyrene, dichlorostyrene, monobromostyrene, dibromostyrene, fluorostyrene, hydroxystyrene and the like. These may be used alone or in combination of two or more types thereof. In addition, styrene and α-methyl styrene are preferred among these.

The compound capable of copolymerizing with the above-mentioned aromatic vinyl compound includes a cyanidated vinyl compound, a (meth)acrylic acid ester, a maleimide-based compound, a compound having a functional group, and the like. These may be used alone or in combination of two or more types thereof.

The above-mentioned cyanidated vinyl compound includes acrylonitrile, methacrylonitrile and the like. These may be used alone or in combination of two or more types thereof. In addition, acrylonitrile is preferred among these.

The above-mentioned (meth)acrylic acid ester includes an acrylic acid ester such as methyl acrylate, ethyl acrylate, propyl acrylate, butyl acrylate, amyl acrylate, hexyl acrylate, octyl acrylate, 2-ethylhexyl acrylate, cyclohexyl acrylate, phenyl acrylate and benzyl acrylate; a methacrylic acid ester such as methyl methacrylate, ethyl methacrylate, propyl methacrylate, butyl methacrylate, amyl methacrylate, hexyl methacrylate, octyl methacrylate, 2-ethylhexyl methacrylate, dodecyl methacrylate, octadecyl methacrylate, cyclohexyl methacrylate, phenyl methacrylate and benzyl methacrylate. These may be used alone or in combination of two or more types thereof. In addition, methyl methacrylate is preferred among these.

The above-mentioned maleimide compound includes maleimide, N-methyl maleimide, N-butyl maleimide, N-cyclohexyl maleimide, N-phenyl maleimide and the like. These may be used alone or in combination of two or more types thereof. In addition, N-cyclohexyl maleimide and N-phenyl maleimide are preferred among these. Introduction of the monomer unit of a maleimide compound into a polymer can be applied to an imidization after copolymerization with maleic anhydride.

The compound having a functional group may be an unsaturated compound having one or more of carboxyl group, acid anhydride group, hydroxyl group, amino group, amide group, epoxy group, oxazoline group or the like, and the like. In addition, an unsaturated compound having a group substituted with a functional group may be used.

The unsaturated compound having a carboxyl group includes acrylic acid, methacrylic acid, ethacrylic acid, maleic acid, fumaric acid, itaconic acid, crotonic acid, cinnamic acid and the like. These may be used alone or in combination of two or more types thereof.

The unsaturated compound having an acid anhydride group includes maleic anhydride, itaconic anhydride, citraconic anhydride and the like. These may be used alone or in combination of two or more types thereof. The unsaturated compound having a hydroxyl group includes 3-hydroxy-1-propene, 4-hydroxy-1-butene, cis-4-hydroxy-2-butene, trans-4-hydroxy-2-butene, 3-hydroxy-2-methyl-1-propene, 2-hydroxyethyl acrylate, 2-hydroxyethyl methacrylate, N-(4-hydroxyphenyl)maleimide and the like. These may be used alone or in combination of two or more types thereof.

The unsaturated compound having an amino group includes aminoethyl acrylate, propylaminoethyl acrylate, dimethylaminomethyl acrylate, diethylaminomethyl acrylate, 2-dimethylaminoethyl acrylate, aminoethyl methacrylate, propylaminoethyl methacrylate, dimethylaminomethyl methacrylate, diethylaminomethyl methacrylate, 2-dimethylaminoethyl methacrylate, phenylaminoethyl methacrylate, p-aminostyrene, N-vinyl diethylamine, N-acetyl vinyl amine, acrylamine, methacrylamine, N-methyl acrylamine and the like. These may be used alone or in combination of two or more types thereof. The unsaturated compound having an amide group includes acrylamide, N-methyl acrylamide, methacrylamide, N-methyl methacrylamide and the like. These may be used alone or in combination of two or more types thereof.

The unsaturated compound having an epoxy group includes glycidyl acrylate, glycidyl methacrylate, allyl glycidyl ether and the like. These may be used alone or in combination of two or more types thereof. The unsaturated compound having an oxazoline group includes vinyl oxazoline and the like. These may be used alone or in combination of two or more types thereof.

The vinyl-based monomer (b) for forming the above-mentioned rubber-reinforced copolymeric resin (A1) is preferably used according to combinations as follows. When a cyanidated vinyl compound is used, compatibility between components [A] and [B] may be improved and impact resistance of the present composition may also be improved. (1) an aromatic vinyl compound and a cyanidated vinyl compound. (2) an aromatic vinyl compound, a cyanidated vinyl compound and other compound.

The above-mentioned rubber-reinforced copolymeric resin (A1) is one obtained by polymerization of the vinyl-based monomer (b) in the presence of the rubbery polymer (a). This rubber-reinforced copolymeric resin (A1) is composed of one or more of a rubber-reinforced copolymeric resin (i) obtained by using an aromatic vinyl compound as the vinyl-based monomer (b), or of one or more of a rubber-reinforced copolymeric resin (ii) obtained by using the monomer (1) above as the vinyl-based monomer (b), or of one or more of a rubber-reinforced copolymeric resin (iii) obtained by using the monomer (2) above as the vinyl-based monomer (b). Further, the resin may be one wherein these are combined.

Hereinafter, the method for the production of the above-mentioned rubber-reinforced copolymeric resin (A1) is described. The above-mentioned rubber-reinforced copolymeric resin (A1) can be produced by emulsion polymerization, bulk polymerization, solution polymerization or suspension polymerization of the vinyl-based monomer (b) in the presence of the rubbery polymer (a). Among these, emulsion polymerization is preferred. The reaction may be conducted by charging all of the vinyl-based monomer (b) at once in the presence of the whole amount of the rubbery polymer (a), or by charging the vinyl-based monomer (b) dividedly or successively. Additionally, these methods may be combined. Further, the reaction may be conducted by adding the whole amount or a part of the rubbery polymer (a) in the middle of the polymerization of the vinyl-based monomer (b).

Moreover, with regard to the amounts to be used of the rubbery polymer (a) and the vinyl-based monomer (b), the amount of the vinyl-based monomer (b) is usually in the range from 25 to 230 parts by mass and more preferably from 40 to 180 parts by mass when the rubbery polymer (a) is assumed to be 100 parts by mass.

The amounts to be used of each of the vinyl-based monomer (b) are as follows.

In the monomer (1) above, amounts of the aromatic vinyl compound and the cyanidated compound to be used are respectively preferably from 65% to 95% by mass and from 5% to 35% by mass, more preferably from 70% to 90% by mass and from 10% to 30% by mass and further preferably from 75% to 85% by mass and from 15% to 25% by mass, based on 100% by mass of the total amount of the vinyl-based monomer (b).

Additionally, in the monomer (2) above, amounts of the aromatic vinyl compound, the cyanidated compound and other compound to be used are respectively preferably from 50% to 94% by mass, from 5% to 35% by mass and from 1% to 45% by mass, more preferably from 30% to 85% by mass, from 10% to 30% by mass and from 5% to 40% by mass and further preferably from 45% to 80% by mass, from 15% to 25% by mass and from 5% to 30% by mass, based on 100% by mass of the total amount of the vinyl-based monomer (b).

If the amount of the cyanidated compound to be used is too little, compatibility between the components [A] and [B] may be reduced and impact resistance may also be lowered. On the other hand, if the amount of the cyanidated compound to be used is too much, thermal stability may be lowered.

In the case the above-mentioned rubber-reinforced copolymeric resin (A1) is produced by way of emulsion polymerization, a polymerization initiator, a chain-transfer agent, an emulsifier, water and the like are usually used.

The polymerization initiator includes a redox-type initiator by combining an organic hydroperoxide such as cumene hydroperoxide, diisopropylbenzene hydroperoxide and p-menthane hydroperoxide, and a reducing agent such as sugar-containing pyrophosphoric acid formulation and sulfoxylate formulation; a persulfate such as potassium persulfate; a peroxide such as benzoyl peroxide (BPO), lauroyl peroxide, tert-butyl peroxylaurate and tert-butylperoxy monocarbonate; an azo-based polymerization initiator such as azobis(isobutyronitrile), and the like. These may be used alone or in combination of two or more types thereof. The above-mentioned polymerization initiator is added into the reaction system all at once or continuously. In addition, the above-mentioned polymerization initiator is used usually in an amount from 0.05% to 5% by mass and preferably from 0.1% to 1% by mass with respect to the total amount of the above-mentioned vinyl-based monomer (b).

The chain-transfer agent includes a mercaptan such as octyl mercaptan, n-dodecyl mercaptan, tert-dodecyl mercaptan, n-hexyl mercaptan, n-hexadecyl mercaptan, n-tetradecyl mercaptan and tert-tetradecyl mercaptan; a terpinolene, $\alpha$-methyl styrene dimer; tetraethylthiuram sulfide, acrolein, methacrolein, allyl alcohol, 2-ethylhexyl thioglycol and the like. These may be used alone or in combination of two or more types thereof. The above-mentioned chain-transfer agent is used usually in an amount from 0.05% to 2% by mass with respect to the total amount of the above-mentioned vinyl-based monomer (b).

The emulsifier may be used an anionic surfactant including a sulfuric acid ester of a higher alcohol; an alkylbenzene sulfonate such as sodium dodecylbenzene sulfonate; an aliphatic sulfonate such as sodium lauryl sulfonate; a rosinate; a phosphate and the like, a nonionic surfactant including an alkylester compound or an alkylether compound of polyethylene glycol and the like, and the like. These may be used alone or in combination of two or more types thereof. The above-mentioned emulsifier is used usually in an amount from 0.3% to 5 % by mass with respect to the total amount of the above-mentioned vinyl-based monomer (b).

The emulsion polymerization may be carried out under publicly known conditions. A latex obtained by this emulsion polymerization is usually subjected to solidification with a coagulant, the polymer component is pulverized, and then the product is purified by rinsing and drying. Examples of the coagulant include an inorganic salt such as calcium chloride, magnesium sulfate, magnesium chloride and sodium chloride; an inorganic acid such as sulfuric acid and hydrochloric acid; an organic acid such as acetic acid, lactic acid and citric acid, and the like. In addition, neutralization using an alkaline component or an acidic component may be conducted after solidification depending on performances required, and then rinsing may also be conducted.

It is noted that in the case where the inorganic salt is used as a coagulant, it remains in the rubber-reinforced copolymeric resin (A1) and is contained in the present composition. If the inorganic salt is contained, molecular weight of the component [B] sometimes lowers and impact resistance may be deteriorated. Accordingly, the above-mentioned coagulant is preferably an inorganic acid and/or an organic acid.

When the above-mentioned rubber-reinforced copolymeric resin (A1) is produced by solution polymerization, a solvent, a polymerization initiator, a chain-transfer agent and the like are usually used.

The solvent may be an inactive solvent for polymerization used in publicly known radical polymerization, and includes an aromatic hydrocarbon such as ethylbenzene and toluene; a ketone such as methylethylketone and acetone; a halogenated hydrocarbon such as dichloromethylene and carbon tetrachloride; acetonitrile, dimethylformamide, N-methylpyrrolidone and the like.

The polymerization initiator includes an organic peroxide such as a ketone peroxide, a dialkyl peroxide, a diacyl peroxide, a peroxy ester and a hydroperoxide.

The chain-transfer agent includes a mercaptan, $\alpha$-methyl styrene dimer, a terpinolene and the like.

The solution polymerization may be carried out under publicly known conditions, however, polymerization temperature is preferably in the range from 80°C to 140°C. In the solution polymerization, production may be obtained by thermal polymerization using no polymerization initiators.

Also in manufacture based on the bulk polymerization and the suspension polymerization, publicly known methods can be applied.
The polymerization initiator, the chain-transfer agent and the like used in these method may be the same compounds exemplified in the solution polymerization.

The rubber-reinforced vinyl-based resin obtained generally contains a grafted rubbery polymer wherein a (co) polymer of the vinyl-based monomer (b) is grafted to the rubbery polymer, but sometimes contain a (co)polymer of the vinyl-based monomer (b) wherein the (co)polymer of the vinyl-based monomer (b) is not grafted to the rubbery polymer and a non-grafted rubbery polymer (a).
The graft ratio of the rubber-reinforced copolymeric resin (A1) is preferably in the range from 10% to 100% by mass, and more preferably from 30% to 80% by mass. When the graft ratio is less than 10% by mass, adhesive strength in the interface between the rubbery polymer (a) and a (co)polymer of the vinyl-based monomer (b) is inferior, and impact resistance is sometimes not sufficient. On the other hand, when the graft ratio is exceeding 100% by mass, a rubber elasticity may be deteriorated since a layer consisting of a (co)polymer of the vinyl-based monomer (b) becomes thick, and a layer consisting of a grafted (co)polymer grows inside of the rubbery polymer (a), and impact resistance may also be deteriorated.
Here, the graft ratio refers to a value obtained by the following equation.

$$\text{Graft ratio (\% by mass)} = \{(S - T)/T\} \times 100$$

In the equation, S represents the mass (gram) of an insoluble component obtained by putting 1 gram of a manufactured rubber-reinforced copolymeric resin (A1) into 20 ml of acetone, shaking the mixture with a shaker for 2 hours, and then centrifuging the mixture with a centrifugal separator (revolution speed: 23,000 rpm) for 1 hour to separate an insoluble component and a soluble component, and T represents the mass (gram) of a rubbery polymer (a) contained in 1 gram of the rubber-reinforced copolymeric resin (A1).

In addition, the intrinsic viscosity [η] (measured in methylethylketone at a temperature of 30°C) of a component dissolved by acetone in the above-mentioned rubber-reinforced copolymeric resin (A1), that is, a (co)polymer that is not grafted to the rubbery polymer (a) is preferably in the range from 0.25 to 0.8 dl/g and more preferably from 0.3 to 0.7 dl/g. When the intrinsic viscosity [η] is in the above-mentioned range, moldability and impact resistance are excellent.

The above-mentioned graft ratio and intrinsic viscosity [η] can be easily controlled by changing types and amounts of the polymerization initiator, the chain-transfer agent, the emulsifier, the solvent and the like used in producing the above-mentioned rubber-reinforced vinyl-based resin, further polymerization time, polymerization temperature and the like.

When a plurality of rubber-reinforced copolymeric resins (A1) are used, a mixture prepared after isolating in producing may be used as it is, and one obtained by another method including producing latexes containing each of resins by emulsion polymerization, mixing the latexes, conducting solidification and the like, may be used.

The content of the rubbery polymer (a) in the above-mentioned rubber-reinforced copolymeric resin (A1) is preferably in the range from 3% to 80% by mass, more preferably from 4% to 65% by mass. If the content of the rubbery polymer (a) is too little, impact resistance may be deteriorated. And if the content is too much, moldability, appearance of the molded article and the like may be deteriorated.

The component [A] according to the present invention may be a mixture of the above-mentioned rubber-reinforced copolymeric resin (A1) and a (co)polymer (A2) of the above-mentioned vinyl-based monomer (b) including an aromatic vinyl compound.
Therefore, the above-mentioned component [A] may be one or more of the rubber-reinforced copolymeric resin (A1), or a mixture of one or more of the above-mentioned rubber-reinforced copolymeric resin (A1) and one or more of the above-mentioned (co)polymer (A2).

The above-mentioned (co)polymer (A2) is exemplified as (3) to (6) below. As the monomers, compounds for forming the above-mentioned rubber-reinforced copolymeric resin (A1) may be used and the preferred are the same.

(3) one or more of a (co)polymer obtained by polymerization of only aromatic vinyl compound.
(4) one or more of a copolymer obtained by polymerization of aromatic vinyl compound and cyanidated vinyl compound.
(5) one or more of a copolymer obtained by polymerization of aromatic vinyl compound, cyanidated vinyl compound and other compound.
(6) one or more of a copolymer obtained by polymerization of aromatic vinyl compound and other compound except cyanidated vinyl compound.

These may be used alone or in combination of two or more.

The amounts of each compound used as the vinyl-based monomer (b) are as follows.

In the embodiment (4) above, the amounts of the aromatic vinyl compound and the cyanidated vinyl compound to be used based on 10.0% by mass of total of the vinyl-based monomer (b) are preferably 65% to 95% by mass and 5% to 35% by mass, more preferably 70% to 90% by mass and 10% to 30% by mass and further preferably 75% to 85% by mass and 15% to 25% by mass, respectively.

In the embodiment (5) above, the amounts of the aromatic vinyl compound, the cyanidated vinyl compound and the other compound to be used based on 100% by mass of total of the vinyl-based monomer (b) are preferably 35% to 94% by mass, 5% to 35% by mass and 1% to 30% by mass, more preferably 45% to 85% by mass, 10% to 30% by mass and 5% to 25% by mass and further preferably 55% to 80% by mass, 15% to 25% by mass and 5% to 20% by mass, respectively.

Additionally, in the embodiment (6) above, the amounts of the aromatic vinyl compound and the other compound to be used based on 100% by mass of total of the vinyl-based monomer (b) are preferably 65% to 95% by mass and 5% to 35% by mass, more preferably 70% to 90% by mass and 10% to 30% by mass and further preferably 75% to 85% by mass and 15% to 25% by mass, respectively.

The above-mentioned (co)polymer (A2) can be produced by polymerization of monomer components using a polymerization initiator and the like that are used in production of the above-mentioned rubber-reinforced copolymeric resin (A1) in solution polymerization, bulk polymerization, emulsion polymerization, suspension polymerization and the like, or in thermal polymerization where the polymerization initiator is not used. Also, these polymerizations may be in combination.

The intrinsic viscosity $[\eta]$ (measured in methylethylketone at a temperature of 30°C) of the above-mentioned (co)polymer (A2) is preferably in the range from 0.2 to 1.3 dl/g, more preferably from 0.25 to 0.9 dl/g, and further preferably from 0.3 to 0.7 dl/g. When the intrinsic viscosity $[\eta]$ is in the above-mentioned range, a physical property balance between moldability and impact resistance is excellent. This intrinsic viscosity $[\eta]$ can be controlled by adjusting the production condition, similar to the case in the above-mentioned rubber-reinforced copolymeric resin (A1).

Both in the case where the above-mentioned component [A] consists of only the rubber-reinforced copolymeric resin (A1), and in the case where the above-mentioned component [A] consists of a mixture of the rubber-reinforced copolymeric resin (A1) and the (co)polymer (A2), the content of the rubbery polymer (a) in the present composition or the molded article is preferably in the range from 1% to 30% by mass, more preferably from 1% to 20% by mass, further preferably from 2% to 15% by mass, and particularly from 3% to 10% by mass. If the content of the rubbery polymer (a) is too little, impact resistance may be deteriorated, and if the content is too much, moldability, heat resistance and the like may be deteriorated.

The intrinsic viscosity $[\eta]$ (measured in methylethylketone at a temperature of 30°C) of a component dissolved by acetone in the component [A] is preferably in the range from 0.2 to 1.3 dl/g, more preferably from 0.3 to 0.9 dl/g, further preferably from 0.35 to 0.7 dl/g. When the intrinsic viscosity $[\eta]$ is in the above-mentioned range, a physical balance between moldability and impact resistance is excellent.

Additionally, the polydispersity index of the above-mentioned component dissolved by acetone, that is a ratio (Mw/Mn) where the weight-average molecular weight (Mw) by GPC is divided by the number-average molecular weight (Mn), is preferably in the range from 1.3 to 5, more preferably from 1.5 to 4, and further preferably 1.5 or more and less than 3. If this Mw/Mn ratio is too high, moldability may be deteriorated.

The content of the component [A] in the present thermoplastic resin composition or the molded article is in the range from 5% to 60% by mass, preferably from 5% to 40% by mass, and further preferably from 5% to 20% by mass, based on 100% by mass of the total of the components [A] and [B]. If the content of the component [A] is less than 5% by mass, impact resistance may be deteriorated. On the other hand, if the content exceeds 60% by mass, moldability, heat resistance and the like may be deteriorated.

Number-average particle diameter of a rubbery polymer wherein a polymer of the vinyl-based monomer (b) is grafted (if non-grafted acryl-based rubbery polymer is present, it is counted) in the component [A] or the present composition or the molded article is preferably in the range from 80 to 15,000 nm, more preferably from 100 to 15,000 nm and particularly from 200 to 2,000 nm. When the number-average particle diameter is in the above range, impact resistance is excellent.

It is noted that the above-mentioned number-average particle diameter may be one by immersing a thin specimen of component [A] or the present composition or the molded article in a solution of $OsO_4$ or $RuO_4$ to dye and calculating average value from measuring data of 100 rubbery polymer particles, for example, while observing with TEM.

The content of the unit formed from the cyanidated vinyl compound in the present thermoplastic resin composition or the molded article is in the range from 3% to 12% by mass and more preferably from 5% to 10% by mass. If the content exceeds 12% by mass, heat aging property may be deteriorated, and if the content is less than 3% by mass, compatibility with a polycarbonate resin [B] may be deteriorated and impact resistance may be deteriorated.

2. Polycarbonate resin [B]

This component [B] is not particularly limited so long as it has a carbonate bond in the principal chain. The above-mentioned component [B] may be an aromatic polycarbonate or an aliphatic polycarbonate. Further, these may be used in combination. In the present invention, the aromatic polycarbonate is preferred from the aspect of impact resistance, heat resistance and the like. This component [B] may be one whose terminate is modified by an R-CO-group or an R'-O-CO-group (each of R and R' represents an organic group.). This component [B] may be used alone or in combination of two or more types thereof.

As the above-mentioned aromatic polycarbonate, one obtained by melting an aromatic dihydroxy compound and a carbonic acid diester to perform ester interchange (transesterification), one obtained by interfacial polymerization method using phosgene, one obtained by pyridine method using a reaction product of pyridine and phosgene, and the like may be used.

The aromatic dihydroxy compound may be one having two hydroxyl groups in the molecule. Examples of the aromatic dihydroxy compound include dihydroxybenzene such as hydroquinone and resorcinol, 4,4'-biphenol, 2,2-bis (4-hydroxyphenyl) propane (hereinafter referred to as "bisphenol A"), 2,2-bis(3,5-dibromo-4-hydroxyphenyl) propane, 2,2-bis(4-hydroxyphenyl-3-methylphenyl) propane, 2,2-bis(3-tert-butyl-4-hydroxyphenyl) propane, 2,2-bis(3,5-dimethyl-4-hydroxyphenyl) propane, bis(4-hydroxyphenyl) methane, 1,1-bis(p-hydroxyphenyl) ethane, 2,2-bis(p-hydroxyphenyl) butane, 2,2-bis(p-hydroxyphenyl) pentane, 1,1-bis(p-hydroxyphenyl) cyclohexane, 1,1-bis(p-hydroxyphenyl)-4-isopropylcyclohexane, 1,1-bis(p-hydroxyphenyl)-3,3,5-trimethylcyclohexane, 1,1-bis(p-hydroxyphenyl)-1-phenylethane, 9,9-bis(p-hydroxyphenyl) fluorene, 9,9-bis(p-hydroxy-3-methylphenyl) fluorene, 4,4'-(p-phenylenediisopropylidene) diphenol, 4,4'-(m-phenylenediisopropylidene) diphenol, bis(p-hydroxyphenyl) oxide, bis(p-hydroxyphenyl) ketone, bis(p-hydroxyphenyl) ether, bis(p-hydroxyphenyl) ester, bis(p-hydroxyphenyl) sulfide, bis(p-hydroxy-3-methylphenyl) sulfide, bis(p-hydroxyphenyl) sulfone, bis(3,5-dibromo-4-hydroxyphenyl) sulfone, bis(p-hydroxyphenyl) sulfoxide and the like. These may be used alone or in combination of two or more types thereof.

Among the above-mentioned aromatic dihydroxy compounds, a compound having a hydrocarbon group between two benzene rings is preferred. This hydrocarbon in this compound may be a halogen-substituted hydrocarbon group. In addition, a hydrogen atom in the benzene ring may be replaced with a halogen atom. Therefore, the above-mentioned compound includes bisphenol A, 2,2-bis(3,5-dibromo-4-hydroxyphenyl) propane, 2,2-bis(4-hydroxyphenyl-3-methylphenyl) propane, 2,2-bis(3-tert-butyl-4-hydroxyphenyl) propane, 2,2-bis(3,5-dimethyl-4-hydroxyphenyl) propane, bis(4-hydroxyphenyl) methane, 1,1-bis(p-hydroxyphenyl) ethane, 2,2-bis(p-hydroxyphenyl) butane and the like. Among these, bisphenol A is particularly preferred.

The carbonic acid diester used for obtaining the aromatic polycarbonate by transesterification includes dimethyl carbonate, diethyl carbonate, di-tert-butyl carbonate, diphenyl carbonate, ditolyl carbonate and the like. These may be used alone or in combination of two or more types thereof.

The viscosity-average molecular weight of the above-mentioned component [B] is preferably in the range from 15,000 to 40,000, more preferably from 17,000 to 30,000 and particularly from 18,000 to 28,000. If the viscosity-average molecular weight is higher, the notched impact strength is improved and on the other hand, the fluidity is not sufficient to reduce the moldability.

The above-mentioned component [B] may be a mixture of two or more polycarbonate resins whose viscosity-average molecular weights are different from each other and are out of the preferable range, so long as the viscosity-average molecular weight as a whole resides the above range.

The refractive index of the above-mentioned component [B] is generally in the range from 1.580 to 1.590. Therefore, the thermoplastic resin composition of the present invention is to contain the components [A] and [B], that is to say, components whose refractive indexes are different from each other, and transparency may be reduced. When the content ratio among components is in the specific range, translucence may be obtained.

The content of the component [B] in the thermoplastic resin composition of the present invention or the molded article is in the range from 40% to 95% by mass, preferably from 60% to 95% by mass, more preferably from 65% to 95% by mass and further preferably from 70% to 95% by mass with respect to 100% by mass of the total of the above-mentioned components [A] and [B]. When the content is in the above-mentioned range, a physical property balance between moldability and heat resistance is excellent.

3. Other components

The thermoplastic resin composition of the present invention may contain other polymer components, additives and the like according to purposes, uses or the like.
The other polymer components are not particularly limited and are preferably a thermoplastic polymer. This thermoplastic polymer includes a resin, an alloy and an elastomer. These may be used alone or in combination of two or more types thereof. In addition, preferred is a thermoplastic resin among these.

Examples of the thermoplastic resin include polyester resin; olefin-based resin; poly vinyl chloride-based resin; polyamide-based resin; polyacetal resin (POM); polyarylate resin; poly phenylene ether; poly phenylene sulfide; fluorine resin; imide-based resin; ketone-based resin; sulfone-based resin; poly vinyl acetate; polyethylene oxide; poly vinyl alcohol; poly vinyl ether; poly vinyl butylal; phenoxy resin; photosensitive resin; liquid crystal polymer; biodegradable plastic and the like. These may be used alone or in combination of two or more types thereof. Additionally, the polyester resin is preferred among these.

When the thermoplastic resin composition of the present invention comprises the above-mentioned other polymer components, the content thereof is preferably in the range from 1 to 100 parts by mass, more preferably from 2 to 50 parts by mass and further preferably from 3 to 40 parts by mass based on 100 parts by mass of the total amount of the above-mentioned components [A] and [B].

The thermoplastic resin composition of the present invention is a composition comprising the above-mentioned components [A] and [B], and further polyester resin (hereinafter, referred to also as "component [C]").

The above-mentioned component [C] may be an aromatic polyester, an aliphatic polyester or an alicyclic polyester. Each of these polyesters may be used alone or in combination of two or more.

When this component [C] is contained, impact resistance can be improved.

The component [C] is preferably a condensate of a dicarboxylate comprising a dicarboxylic acid and/or an ester-formable derivative thereof, and a diol comprising a diol compound and/or an ester-formable derivative thereof.

In the dicarboxylate, examples of the dicarboxylic acid include an aromatic dicarboxylic acid such as terephthalic acid, isophthalic acid, orthophthalic acid, 2,6-naphthalene dicarboxylic acid, 4,4'-biphenyl dicarboxylic acid, 4,4'-diphenylether dicarboxylic acid, 4,4'-diphenylmethane dicarboxylic acid, 4,4'-dihenylsulfone dicarboxylic acid and 4,4'-diphenylisopropylidene dicarboxylic acid; an alicyclic dicarboxylic acid such as 1,2-cyclohexane dicarboxylic acid and 1,4-cyclohexane dicarboxylic acid; an aliphatic dicarboxylic acid such as malonic acid, succinic acid, adipic acid, azelaic acid, sebacic acid and diglycol acid, and the like. In addition, a substitution product of the above-mentioned aromatic dicarboxylic acid (such as alkyl group-substituted compound of methyl isophthalate) and a derivative thereof (such as alkyl ester of dimethyl terephthalate, 2,6-naphthalene dicarboxylic acid dimethyl ester and the like) may also be used. Further, an oxyacid such as p-oxybenzoic acid and p-hydroxyethoxy benzoic acid, and an ester-formable derivative thereof may be used.

The above-mentioned dicarboxylate may be used alone or in combination of two or more.

Additionally, examples of the above-mentioned diol include an alkylene glycol having carbon atom of 2 to 12 such as ethyleneglycol, propylene glycol, butylene glycol (tetramethylene glycol), pentamethylene glycol, hexylene glycol (hexamethylene glycol), decamethylene glycol and neopentyl glycol; an aliphatic diol such as an dialkylene glycol including diethylene glycol, dipropylene glycol and the like; an alicyclic diol such as 1,2-cyclohexane diol, 1,2-cyclohexane dimethanol, 1,3-cyclohexane dimethanol and 1,4-cyclohexane dimethanol; an aromatic diol such as pyrocatechol, resorcinol, hydroquinone, 3,3'-dihydroxybiphenyl, 4,4'-dihydroxybiphenyl, bisphenol A, 2,2-bis(4'-β-hydroxyethoxyphenyl) propane, bis(4-hydroxyphenyl)sulfone and bis(4-β-hydroxyethoxyphenyl)sulfone; and the like. A substitution product thereof and a derivative thereof may be used. Further, a cyclic ester such as ε-caprolactone may be used.

Moreover, a long-chain type diol compound such as polyethylene glycol and poly tetramethylene glycol, an alkyleneoxide addition polymer of a bisphenol compound such as ethyleneoxide addition polymer of bisphenol A, and the like may be used.

The above-mentioned diol may be used alone or in combination of two or more.

Either or both of a homopolyester and a copolyester may be used as a polyester obtained by reaction (condensation) of the above-mentioned dicarboxylate and the diol.

Examples of the homopolyester include polyethylene terephthalate (PET), polybutylene terephthalate (PBT), polyhexamethylene terephthalate, polycyclohexanedimethylene terephthalate (PCT), polyneopentyl terephthalate, polyethylene isophthalate, polyethylene naphthalate (PEN), polybutylene naphthalate, polyhexamethylene naphthalate and the like.

Additionally, examples of the copolyester are polyesters shown as (7) to (9) below:

(7) condensate by one dicarboxylate and two or more diols,
(8) condensate by two or more dicarboxylates and one diol, and
(9) condensate by two or more dicarboxylates and two or more diols.

The above-mentioned condensates are disclosed in JP-A H09-509449.

Examples of the above-mentioned condensate (7) include a condensate by a dicarboxylate and two or more of an alkylene glycol having carbon atom of 2 to 12, a condensate by a dicarboxylate and a diol containing an alkylene glycol having carbon atom of 2 to 12 and an alicyclic diol, and the like. Among these, the latter is preferred and a condensate by terephthalic acid or terephthalic acid alkyl ester as the dicarboxylate, and ethyleneglycol and an alkylene glycol having carbon atom of 3 to 12 and/or 1,4-cyclohexane dimethanol as the diol, and the like may be used. More preferable embodiment is one by the case wherein the alkylene glycol is ethyleneglycol and the alicyclic diol is 1,4-cyclohexane dimethanol. In particular, polyesters obtained by reaction of terephthalic acid, ethyleneglycol and 1,4-cyclohexane dimethanol are generally referred to as "PETG" (ethyleneglycol at 50% or more by mole and less than 100% by mole, and 1,4-cyclohexane dimethanol at more than 0% by mole and 50% or less by mole) and "PCTG" (ethyleneglycol at more than 0% by mole and 50% or less by mole, and 1,4-cyclohexane dimethanol at 50% or more by mole and less than 100% by mole), and they are available as "Easter Copolyester 6763" and "Easter PCTG Copolyester 5445" (trade name) manufactured by Eastman Chemical Company. Both of these may be preferably used.

Examples of the above-mentioned condensate (8) include a copolyester consisting of terephthalic acid unit, isophthalic acid unit and ethyleneglycol unit, that is a condensate by terephthalic acid and isophthalic acid as the dicarboxylate and ethyleneglycol as the diol, a copolyester consisting of terephthalic acid unit, 2,6-naphthalene dicarboxylic acid unit and ethyleneglycol unit, and the like. In the case of these copolyesters, "copolymerized PET" comprising primarily terephthalic acid unit is preferably used. The content of the terephthalic acid unit is preferably in the range from 70% to 98% by mole and more preferably from 80% to 95% by mole based on the total units formed from dicarboxylic acid.

Examples of the above-mentioned condensate (9) include a condensate by terephthalic acid and isophthalic acid as the dicarboxylate and ethyleneglycol and 1,4-cyclohexane dimethanol as the diol and the like. Further, one or more of 2,6-naphthalene dicarboxylic acid, 1,4-cyclohexane dicarboxylic acid, succinic acid, sebacic acid, adipic acid, glutaric acid, azelaic acid and the like in addition to or instead of isophthalic acid as the dicarboxylate may be used, and diethyleneglycol, triethyleneglycol, propane diol, butane diol, pentane diol, tetramethylcyclobutane diol and the like may be used in addition to or instead of ethyleneglycol as the diol.

The above-mentioned component [C] may be a crystalline resin or an amorphous resin. In addition, the component may be in combination of a crystalline resin and an amorphous resin. Preferred is a polyester resin, which is transparent in conditions such as kneading temperature and kneading time for manufacturing a composition, or conditions such as molding temperature, molding cycle and temperature of a metal mold) for manufacturing a molded article described later. In the present invention, the above-mentioned component [C] is preferably an amorphous resin. When the component [C] is amorphous, molded articles can be produced by using the present composition in a wide manufacturing condition and adjusting of total light transmittance (translucence) of a resultant molded article may be easy. Additionally, even if the present composition is stored under a high temperature and/or a high humidity, fluidity can be in desired range to conduct a stable production of a molded article.

It is noted that "amorphous" means a property where physical properties never change due to crystallization in the case of heating. For example, it may be confirmed by showing no exothermic peaks based on crystallization or generating white turbidness or whitening visually when a thermal analysis is performed using differential scanning calorimetry (DSC).

The above-mentioned amorphous resin may be either or both a homopolyester and a copolyester. In the case of using a copolyester, a condensate represented by the above (7) is particularly preferable. Example of the condensate includes above-mentioned "Easter Copolyester 6763" and "Easter PCTG Copolyester 5445" manufactured by Eastman Chemical Company, and the like. In the condensate represented by the above (8), the copolymerized PET is usually a crystalline resin.

In the case where the above-mentioned component [C] is contained in the thermoplastic resin composition of the present, the content of this component [C] is preferably in the range from 1 to 40 parts by mass, more preferably from 3 to 35 parts by mass and further preferably from 5 to 30 parts by mass based on 100 parts by mass of the total of the components [A] and [B]. If the content of the component [C] is too much, heat stability may be lowered.

The additive includes, in addition to a phosphoric compound described below, a filler, a light scattering agent, a weather resisting agent, an ultra violet absorber, an antioxidant, an anti-static agent, a heat age resistor, an anti-aging agent, a plasticizer, a compatibilizing agent, a flame retardant, a sliding agent, an antibacterial agent, a mold-releasing agent, a coloring agent and the like. Additives except a light scattering agent are preferably ones whose diameter of particle is smaller than wavelength of the visible for the purpose of maintaining translucency.

The thermoplastic resin composition of the present invention can be a composition comprising the above-mentioned components [A] and [B], and a phosphoric compound (hereinafter, referred to also as "component [D]").

This component [D] is not particularly limited so long as it has a P-O bond. Example thereof includes phosphoric acid, phosphorus acid, phosphinic acid and diphosphoric acid, and derivatives thereof, a silyl phosphate and the like. These may be inorganic or organic.

When the present composition contains this component [D], susceptibility by thermal history is little in extruding, forming and the like, and a molded article excellent in translucency, impact resistance and heat resistance can be stably obtained. Further, lowering of molecular weight of polycarbonate resin can be suppressed in melting and kneading of the present composition. Therefore, discoloration of the surface of a molded article never occurs and a molded article having desired appearance can be obtained.

Example of the inorganic compound includes, in addition to phosphoric acid, phosphorus acid, phosphinic acid and diphosphoric acid, a phosphate such as trisodium phosphate, tripotassium phosphate, triammonium phosphate, disodium hydrogen phosphate, dipotassium hydrogen phosphate, diammonium hydrogen phosphate, zinc hydrogen phosphate, magnesium hydrogen phosphate, strontium hydrogen phosphate, barium hydrogen phosphate, sodium dihydrogen phosphate, potassium dihydrogen phosphate, lithium dihydrogen phosphate, ammonium dihydrogen phosphate, calcium dihydrogen phosphate, zinc dihydrogen phosphate, magnesium dihydrogen phosphate and barium dihydrogen phosphate; a phosphite such as sodium phosphite, potassium phosphite and ammonium phosphate; a phosphonate such as sodium phosphonate, potassium phosphonate, ammonium phosphonate and calcium phosphonate; a hypophosphite such as sodium hypophosphite, potassium hypophosphite, lithium hypophosphite, calcium hypophosphite, magnesium hypophosphite and barium hypophosphite; a pyrophosphate such as sodium pyrophosphate, potassium pyrophosphate, magnesium pyrophosphate, potassium pyrophosphate, disodium dihydrogen pyrophosphate and zinc pyrophosphate; and the like.

These may be used alone or in combination of two or more types thereof.

Example of the organic compound includes an organic phosphate represented by the following formula (I) and a salt thereof, an organic phosphite represented by the following formula (II) and a salt thereof, an organic phosphonate represented by the following formula (III) and a salt thereof, and the like.

$$O=P(OR^1)_s(OM^{n+}_{1/n})_{3-s} \qquad (I)$$

[In the formula, each $R^1$ is independently a hydrocarbon group having carbon atoms of 1 to 30, each M is hydrogen atom or a metal atom selected from the group consisting of 1A group, 1B group, 2A group and 2B group in the periodic table, s is 1, 2 or 3, and n is 1 or 2.]

$$P(OR^1)_t(OM^{n+}_{1/n})_{3-t} \qquad (II)$$

[In the formula, each $R^1$ is independently a hydrocarbon group having carbon atoms of 1 to 30, each M is hydrogen atom or a metal atom selected from the group consisting of 1A group, 1B group, 2A group and 2B group in the periodic table, t is 1, 2 or 3, and n is 1 or 2.]

$$O=P(R^2)(OM^{n+}_{1/n)2} \qquad (III)$$

[In the formula, $R^2$ is hydrogen atom or a hydrocarbon group having carbon atoms of 1 to 30, each M is hydrogen atom or a metal atom selected from the group consisting of 1A group, 1B group, 2A group and 2B group in the periodic table, n is 1 or 2, and all of $R^2$ and M are not hydrogen atom.]

These may be used alone or in combination of two or more types thereof.

In the organic phosphate represented by the above formula (I), $R^1$ is a hydrocarbon group having carbon atoms of 1 to 30, however, an aliphatic hydrocarbon group (straight-type and branch-type may be used.), an alicyclic hydrocarbon group (it may have a substituent.) and an aromatic hydrocarbon group (it may have a substituent.) may be used. In addition, a saturated-type and an unsaturated-type may be used. Preferable number of carbon atoms is in the range from 6 to 28, more preferably from 10 to 24. In the case s=2 or s=3, two $R^1$s may form a ring structure.

The organic phosphate represented by the above formula (I) is a monoester in the case of s=1 and includes methyl dihydrogenphosphate, ethyl dihydrogenphosphate, hexyl dihydrogenphosphate, octyl dihydrogenphosphate, nonyl dihydrogenphosphate, decyl dihydrogenphosphate, dodecyl dihydrogenphosphate, octadecyl dihydrogenphosphate, nonylphenyl dihydrogenphosphate and the like. The phosphate is a diester in the case of s=2 and includes dimethyl phosphate, diethyl phosphate, dihexyl phosphate, dioctyl phosphate, di(2-ethylhexyl) phosphate, dinonyl phosphate, didecyl phosphate, didodecyl phosphate, ditetradecyl phosphate, dioctadecyl phosphate, diphenyl phosphate, dibenzyl phosphate and the like. In addition, The phosphate is a triester in the case of s=3 and includes trimethyl phosphate, triethyl phosphate, trihexyl phosphate, trioctyl phosphate, tridecyl phosphate, trioctadecyl phosphate, triphenyl phosphate, tricresyl phosphate and the like. A metal salt of each compound may be used.

Further, in the case of s=2, sodium-2,2-methylene bis(4,6-di-tert-butylphenyl)phosphate, sodium-2,2'-methylene bis(4,6-di-tert-butylphenyl)phosphate, lithium-2,2'-methylene bis(4,6-di-tert-butylphenyl)phosphate, sodium-2,2'-ethylidene bis(4,6-di-tert-butylphenyl)phosphate, lithium-2,2'-ethylidene bis(4,6-di-tert-butylphenyl)phosphate and the like which have a ring structure by plural $R^1_S$ may be used.

In the organic phosphite represented by the above formula (II), $R^1$ is a hydrocarbon group having carbon atoms of 1 to 30, however, an aliphatic hydrocarbon group (straight-type and branch-type may be used.), an alicyclic hydrocarbon group (it may have a substituent.) and an aromatic hydrocarbon group (it may have a substituent.) may be used. In addition, a saturated-type and an unsaturated-type may be used. Preferable number of carbon atoms is in the range from 6 to 28, and more preferably from 10 to 24.

The organic phosphite represented by the above formula (II) is a monoester in the case of t=1 and includes methyl dihydrogenphosphite, ethyl dihydrogenphosphite, hexyl dihydrogenphosphite, octyl dihydrogenphosphite, nonyl dihydrogenphosphite, decyl dihydrogenphosphite, dodecyl dihydrogenphosphite, octadecyl dihydrogenphosphite, hexacosylphenyl dihydrogenphosphite, dodecylphenyl dihydrogenphosphite and the like. The phosphite is a diester in the case of t=2 and includes dimethyl hydrogenphosphite, diethyl hydrogenphosphite, dihexyl hydrogenphosphite, dioctyl hydrogenphosphite, di(2-ethylhexyl) hydrogenphosphite, dinonyl hydrogenphosphite, didecyl hydrogenphosphite, didodecyl hydrogenphosphite, ditetradecyl hydrogenphosphite, dioctadecyl hydrogenphosphite, octylbenzyl hydrogenphosphite, nonyltridecyl hydrogenphosphite, butyleicosyl hydrogenphosphite, diphenyl hydrogenphosphite, dibenzyl hydrogenphosphite and the like. In addition, The phosphite is a triester in the case of t=3 and includes trimethyl phosphite, triethyl phosphite, trihexyl phosphite, trioctyl phosphite, tri(2-ethylhexyl) hydrogenphosphite, tridecyl phosphite, tridodecyl phosphite, trioctadecyl phosphite, triphenyl phosphite, tricresyl phosphite, trixylenyl phophite, tris(2,4-di-tert-butylphenyl) phosphite, tris(nonylphenyl) phosphite, diphenyldecyl phosphite, phenyldidecyl phosphite and the like. A metal salt of each compound may be used.

In the organic phosphonate represented by the above formula (III), $R^2$ is hydrogen atom or hydrocarbon group having carbon atoms of 1 to 30. In the latter case, however, an aliphatic hydrocarbon group (straight-type and branch-type may be used.), an alicyclic hydrocarbon group (it may have a substituent.) and an aromatic hydrocarbon group (it may have a substituent.) may be used. In addition, a saturated-type and an unsaturated-type may be used. Preferable number of carbon atoms is in the range from 6 to 28, more preferably from 10 to 24.

Examples of the organic phosphonate represented by the above formula (III) include dimethyl phosphonate, diethyl phosphonate, dibutyl phosphonate, dihexyl phosphonate, dioctyl phosphonate, didecyl phosphonate, didodecyl phosphonate, dioctadecyl phosphonate, diphenyl phosphonate, ditolyl phosphonate, dimethylmethyl phosphonate, diethylethyl phosphonate, diisopropylmethyl phosphonate, dioctylphenyl phosphonate and diphenylmethyl phosphonate. A metal salt of each compound may be used.

The organic phosphate represented by the above formula (I) is preferable as the component [D]. In particular, a compound wherein M in the above formula (I) is hydrogen atom, represented by the following formula (IV) and a metal salt thereof are preferred.

$$O=P(OR^1)_s(OH)_{3-s} \qquad (IV)$$

[In the formula, each $R^1$ is independently a hydrocarbon group having carbon atoms of 1 to 30 and s is 1 or 2.]

In the case the compound represented by the above formula (IV) is a compound wherein $R^1$ is a hydrocarbon group having carbon atoms of 5 or less, the compound has a low boiling point and may evaporate or scatter during melting and kneading of the present composition to produce. Accordingly, $R^1$ is a hydrocarbon having carbon atoms of preferably 6 or more and particularly 10 or more. Specific example includes octadecyl dihydrogenphosphate, dioctadecyl phosphate and the like, and these may be used alone or in combination.

When the above-mentioned component [D] is contained in the present thermoplastic resin composition, the content of this component [D] is preferably in the range from 0.01 to 5 parts by mass, more preferably from 0.02 to 3 parts by mass, further preferably from 0.03 to 1 part by mass and particularly from 0.05 to 0.5 part by mass based on 100 parts by mass of the total of the above-mentioned components [A] and [B]. This ranging content can effectively suppress the molecular weight of the polycarbonate resin [B] from lowering. When the present composition contains further the above-mentioned other polymer including a polyester resin having -COO-structure, polyarylate resin and the like, susceptibility by thermal history is little in the present composition and lowering of these resins can be suppressed to lead to a stable melting and kneading.

The above-mentioned filler may be used alone or in combination of two or more, being not limited in particulate, fiber-like, lumpy, tabular, shapeless and the like.

Examples of the particulate filler include calcium carbonate, talc, barium sulfate, graphite, molybdenum disulfide, magnesium oxide, wollastnite, milled fiber and the like.

Examples of the fiber-like filler include glass fiber, carbon fiber, zinc oxide whisker, potassium titanate whisker, aluminum borate whisker and the like. Preferable fiber diameter is in the range from 6 to 60 μm, and preferable fiber length is 30 μm or more.

Examples of the lumpy filler include glass beads, hollow glass, rock filler and the like.

Examples of the tabular filler include mica, glass flake and the like.

When the above-mentioned filler is used, rigidity and heat deformation resistance may be imparted. In the case where calcium carbonate and talc are used, surface-matted property may be obtained.

The content of the above-mentioned filler is preferably in the range from 1% to 50% by mass and more preferably from 2% to 30% by mass, based on the total polymers including the components [A] and [B].

Examples of the light scattering agent include a fine particle composed of an inorganic compound such as titan oxide, barium sulfate and calcium carbonate, an organic polymer fine particle composed of crosslinked poly methylmethacrylate, crosslinked polystyrene and the like, and the like. The content of this light scattering agent is preferably in the range from 0.2% to 10% by mass and more preferably from 1% to 5% by mass, based on the total polymers including the components [A] and [B].

Examples of the weather resisting agent include a phosphorus-based compound, a benzotriazole-based compound, a benzophenon-based compound and the like.

Examples of the sliding agent include ethylene bisstearylamide, hardened caster oil and the like.

Examples of the anti-static agent include a low molecular weight type anti-static agent, a polymer type anti-static agent and the like. In addition, these may be ion-conductive or electron-conductive.

Examples of the low molecular weight type anti-static agent include an anion-based anti-static agent, a cation-based anti-static agent, a nonion-based anti-static agent, an amphoteric-based anti-static agent, a complexed compound, a metal alkoxide such as an alkoxysilane, an alkoxytitane and an alkoxyzirconium, and derivatives thereof, and the like. Further, examples of the polymer type anti-static agent include a vinyl copolymer having a sulfonate in its molecule, an alkylsulfonate, an alkylbenzenesulfonate, betaine and the like. A polyether, a polyamide elastomer, polyester elastomer and the like may be used.

Examples of the heat age resistor include a phenol-based compound, a phosphorus-based compound, a sulfur-based compound, a lactone-based compound and the like. These may be used alone or in combination of two or more types thereof.

When the heat age resistor is formulated to the present composition, a phenol-based compound, a phosphorus-based compound and a sulfur-based compound are preferably combined to use. Formulation of these compounds is not particularly limited. This combination can hold a rate of tensile elongation even if the composition is left for a long time in an atmosphere having a high temperature of 50°C to 80°C, for example.

Example of the phenol compound includes 2,6-di-tert-butyl phenol derivative, 2-methyl-6-tert-butyl phenol derivative, octadecyl-3-(3,5-di-tert-butyl-4-hydroxyphenyl) propionate, 4,4'-butylidene-bis(6-tert-butyl-m-cresol), pentaerythrityl-tetrakis[3-(3,5-di-tert-butyl-4-hydroxyphenyl)propion ate], 2-[1-(2-hydroxy-3,5-di-tert-pentylphenyl)ethyl]-4,6-di-tert-pentylphe nylacrylate, 2-tert-butyl-6-(3-tert-butyl-2-hydroxy-5-methylbenzyl)-4-methylphenyl acrylate and the like.

Example of the sulfur-based compound includes 3,3'-thiobispropionic acid dilauryl ester, 3,3'-thiobis propionic acid didodecyl ester, 3,3'-thiobis propionic acid dioctadecyl ester, pentaerythrityl·tetrakis(3-lauryl thiopropionate) and the like.

Example of the lactone-based compound includes 5,7-di-tert-butyl-3-(3,4-dimethylphenyl)-3H-benzofran-2-one and the like.

The content of the heat age resistor is preferably 2% or less by mass and more preferably 1% or less by mass based on the total polymers including the components [A] and [B]. If the content of the heat age resistor is too much, the heat age resistor sometimes functions as a catalyst accelerating hydrolysis of the above-mentioned polycarbonate resin [B].

The coloring agent may be a pigment or a dye. Example of the pigment includes carbonblack, red iron oxide and the like.

For preparing the thermoplastic resin composition of the present invention, starting materials are subjected to kneading with an extruder, Banbury mixer, a kneader, a roll, a feeder ruder or the like. The kneading temperature is usually in the range from 200°C to 280°C, and preferably from 210°C to 270°C. Using method of the starting materials is not particularly limited and kneading may be initiated after charging all of the starting materials or be conducted while charging them with multi-step or dividedly.

Preferable preparing method is a method with an extruder, and the particular is with a twin-screw extruder.

In the thermoplastic resin composition of the present invention, the total light transmittance according to ASTM D1003 is preferably in the range from 30% to 80%, more preferably from 40% to 75%, further preferably from 45% to 70% and particularly from 50% to 70%, and translucency is excellent. If this total light transmittance is less than 30%, an essentially opaque one is obtained, it may be difficult to obtain a molded article whose translucency and decorativeness are excellent. On the other hand, if the total light transmittance is higher than 80%, transparency is too high, an article on the other side can be undesirably clearly seen, and a translucent molded article having excellent decorativeness is difficult to manufacture.

Additionally, haze according to ASTM D1003 in the thermoplastic resin composition of the present invention is preferably in the range from 60% to 100%, more preferably from 65% to 100%, and further preferably from 75% to 95%, and translucency is excellent. If this haze is less than 60%, an article on the other side can be undesirably clearly seen, and a translucent molded article having excellent decorativeness is difficult to manufacture.

The thermoplastic resin composition of the present invention can be made into a molded article by publicly known forming method including injection molding, sheet-extrusion, profile extrusion, vacuum molding, blow molding and the like. That is, the present molded article comprises the above-mentioned thermoplastic resin composition.

In the injection molding, a molded article can be obtained by gas-assist molding, in-mold molding, double molding, thermoject molding, sandwich molding and the like in addition to known molding method.

In the sheet extrusion, a plain sheet, a sheet having an embossed pattern or the like on the surface, and the like can be obtained.

In the vacuum molding, a molded article can be obtained by straight molding, drape molding, plug-assist molding, plug-assist reverse-draw molding, air-slip molding, snap-back molding, reverse-draw molding, air-cushion molding, plug-assist air-slip molding, free molding, matched-mold molding, plug-ring molding, slip molding, contact heat molding and the like.

When the molded article is formed, the present composition is generally heated to a temperature in the range from 200°C to 280°C, preferably to a temperature from 210°C to 270°C and molded.

Additionally, the molded article may be subjected to secondary processing such as painting, sputtering and welding according to the usage.

The molded article of the present invention is useful for a lighting system including a lamp or the like, a display unit including a switch or the like, a case, a housing, a tray, a disc and the like of OA equipments, home electric appliances, parts of a motor vehicle and the like due to its excellent performances.

[Examples]

The present invention is described in detail hereinafter using examples. The present invention is in no way limited by these examples. In addition, "part" and "%" in the examples are based on mass unless otherwise indicated.

1. Evaluating method

The following is a description for measuring method of evaluation items in the Experimental Example.

(1) Volume-average particle diameter

Dispersed particles (rubbery polymer (a)) in a latex used for preparing a rubber-reinforced copolymeric resin (A1) were subjected to a light scattering measurement with a laser particle analyzer (Type "LPA-3100", manufactured by Otsuka electronics Co., Ltd.) and the volume-average particle diameter thereof was calculated by cumulant method at number of integrations of 70. It is noted that number-average particle diameter of the rubbery polymer grafted contained in the thermoplastic resin composition after production was confirmed to be almost the same as the above-mentioned volume-average particle diameter of the rubbery polymer.

(2) Graft ratio

Description was in the above.

(3) Intrinsic viscosity [η]

A component dissolved by acetone of the rubber-reinforced copolymeric resin (A1) and a copolymer (A2) were separately solved in methylethylketone, and were subjected to an intrinsic viscosity [η] measurement at 30°C with Ubbelohde viscosimeter.

(4) Fluidity (MFR)

Melt flow rate (MFR) was measured at a temperature of 240°C and a load of 10 kg according to ASTM D1238.

(5) Izod impact strength

Notched strength was measured according to ASTM D256. The size of the specimen was $2.5 \times 1/2 \times 1/4$ inch.

(6) Total light transmittance

It was measured according to ASTM D1003. The thickness of the specimen was 2.5 mm.

(7) Heat deformation temperature

Heat deformation temperature (HDT) was measured at a load of 18.56 kg/cm$^2$ according to ASTM D648. The thickness of the specimen was 1/2 inch.

(8) Haze

It was measured according to ASTM D1003. The thickness of the specimen was 2.5 mm.

(9) Holding rate of MFR

A pellet composed of the thermoplastic resin composition was dried with a dehumidifying drier, and then was set in a condition at a temperature of 95°C and a humidity of 98% for 200 hours. Ratio of MFRs before setting and after leaving was calculated to obtain a holding rate of MFR.

$$\text{Holding rate of MFR (\%)} = \frac{\text{MFR after leaving}}{\text{MFR before setting}} \times 100$$

(10) Holding rate of drop hammer strength after residence (%)

An injection molding apparatus "Type NN30B" manufactured by Niigata Tekkoujo was used to fabricate plate-like molded articles (hereinafter, referred to "specimen P" and "specimen Q") whose size was 2.5 × 100 × 100 mm in different conditions described below. DuPont Type drop hammer strength was measured at 23°C according to ASTM D2794 and holding rate of drop hammer strength after residence was obtained by the following equation.
Specimen P; Cylinder preset temperature was set to 270°C, and then a pellet composed of the thermoplastic resin composition was supplied. The plate-like pieces were fabricated at intervals of 40 seconds/cycle and the fifth shot was used as the "Specimen P".
Specimen Q; Cylinder preset temperature was set to 270°C, and then a pellet composed of the thermoplastic resin composition was supplied. Subsequently, five shot of plate-like pieces were fabricated at intervals of 40 seconds/cycle and the composition was allowed to reside for 15 minutes. After that, the plate-like pieces were fabricated at intervals of 40 seconds/cycle and the fourth shot was used as the "Specimen Q".

$$\text{Holding rate of drop hammer strength after residence (\%)}$$
$$= \frac{\text{Drop hammer strength of specimen Q}}{\text{Drop hammer strength of specimen P}} \times 100$$

(11) ΔE after residence

An injection molding apparatus "Type NN30B" manufactured by Niigata Tekkoujo was used to fabricate plate-like molded articles (hereinafter, referred to "specimen X" and "specimen Y") whose size was 2.5 × 100 × 100 mm in different conditions described below. LAB value (L; brightness, a; redness, b; yellowness) was measured with a multiple light source spectrometer manufactured by Suga Test Insturuments Co., Ltd. to obtain ΔE by the following equation.
Specimen X; Cylinder preset temperature was set to 270°C, and then a pellet composed of the thermoplastic resin composition was supplied. The plate-like pieces were fabricated at intervals of 40 seconds/cycle and the fifth shot was used as the "Specimen X".
Specimen Y; Cylinder preset temperature was set to 270°C, and then a pellet composed of the thermoplastic resin composition was supplied. Subsequently, five shot of plate-like pieces were fabricated at intervals of 40 seconds/cycle and the composition was allowed to reside for 15 minutes. After that, the plate-like pieces were fabricated at intervals of 40 seconds/cycle and the fourth shot was used as the "Specimen Y".

$$\Delta E = \sqrt{\{(L_1 - L_2)^2 + (a_1 - a_2)^2 + (b_1 - b_2)^2\}}$$

(In the formula, $L_1$, $a_1$ and $b_1$ are color tones of the specimen X, respectively, and $L_2$, $a_2$ and $b_2$ are color tones of the specimen Y, respectively.)

The smaller $\Delta E$ is indicated, degree of a change of the color is low and color tones is excellent.

2. Production and evaluation of thermoplastic resin composition (I)

Starting materials for the production of the thermoplastic resin composition are as follows.

2-1. Component [A]

2-1-1. Rubber-reinforced copolymeric resin (A1)

Production example 1-1

Into a glass flask having an inner volume of 7 liters and equipped with an agitator, 50 parts (solid content) of styrene·butadiene copolymer (hereinafter, styrene·butadiene copolymer is sometimes represented by "SBR".) having a volume-average particle diameter of 0.3 μm and a styrene unit of 10% as the rubbery polymer (a), 7.5 parts of styrene, 2.5 parts of acrylonitrile, 1.5 parts of sodium disproportionated rosinate, 0.1 part of tert-dodecyl mercaptan and 100 parts of ion exchanged water were charged and temperature was raised while agitating. When an internal temperature reached 45°C, an aqueous activator containing 0.1 part of sodium ethylenediaminetetraacetate, 0.003 part of ferrous sulfate, 0.2 part of sodium formaldehyde sulfoxylate dihydrate and 15 parts of ion exchanged water, and 0.1 part of diisopropylbenzene hydroperoxide were added and reacted for one hour.

Then, an incremental polymerization component consisting of 50 parts of ion exchanged water, 1 part of sodium disproportionated rosinate, 0.1 part of tert-dodecyl mercaptan, 0.2 part of diisopropyl hydroperoxide, 30 parts of styrene and 10 parts of acrylonitrile was continuously added to the reaction system over a period of 3 hours and continued polymerization while agitating. After adding the entire amount of the incremental polymerization component, agitating was continued for an additional period of one hour to obtain a latex in which rubber-reinforced copolymeric resin (A1-1) was contained.

Subsequently, 0.2 part of an anti-aging agent of 2,2'-methylene-bis(4-ethyl-6-tert-butylphenol) was added to the above latex. After that, 2 parts of sulfuric acid was added to coagulate a resin component. A resultant coagulant was sufficiently rinsed and dried at 75°C for 24 hours to obtain a white powder. The polymerization conversion was 97%. Graft ratio was 75%, and intrinsic viscosity [η] of a component dissolved by acetone was 0.5 dl/g (refer to Table 1).

The calculated refractive index of the rubbery polymer (a) used are indicated in Table 1. This refractive index was calculated by the following equation according to that the rubbery polymer (a) is consisting of 10% of styrene unit and 90% of butadiene unit and refractive indexes of polystyrene and polybutadiene are 1.591 and 1.515, respectively.

$$\text{Refractive index} = 1.591 \times 0.1 + 1.515 \times 0.9$$
$$= 1.523$$

Production examples 1-2 to 1-9 and 1-12

Rubber-reinforced copolymeric resins (A1-2) to (A1-9) and (A1-12) were obtained similar to Production example 1-1 except using a styrene·butadiene copolymer (SBR) having volume-average particle diameter and styrene unit content shown in Table 1 as the rubbery polymer (a). The graft ratio and the intrinsic viscosity [η] of a component dissolved by acetone are indicated in Table 1.

Production examples 1-10 and 1-11

Rubber-reinforced copolymeric resins (A1-10) and (A1-11) were obtained similar to Production example 1-1 except using a polybutadiene having volume-average particle diameter (hereinafter, referred to as "BR") shown in Table 1 as the rubbery polymer (a). The graft ratio and the intrinsic viscosity [η] of a component dissolved by acetone are indicated in Table 1.

Table 1

| | | | Rubber-reinforced copolymer resin (A1) | | | | | | | | | | | |
|---|---|---|---|---|---|---|---|---|---|---|---|---|---|---|---|
| | | | A1-1 | A1-2 | A1-3 | A1-4 | A1-5 | A1-6 | A1-7 | A1-8 | A1-9 | A1-10 | A1-11 | A1-12 |
| Rubbery polymer (a) | | Type | SBR | SBR | SBR | SBR | SBR | SBR | SBR | SBR | SBR | BR | BR | SBR |
| | | Styrene unit content (%) | 10 | 30 | 45 | 55 | 35 | 35 | 35 | 35 | 35 | 0 | 0 | 30 |
| | | Volume-average particle diameter ($\mu$m) | 0.3 | 0.6 | 0.3 | 0.3 | 0.6 | 0.6 | 0.6 | 0.3 | 0.6 | 0.3 | 0.3 | 0.17 |
| | | Refractive index (calculated) | 1.523 | 1.538 | 1.545 | 1.557 | 1.542 | 1.542 | 1.542 | 1.542 | 1.542 | 1.515 | 1.515 | 1.538 |
| Vinyl-based monomer (b) | | styrene (%) | 75 | 75 | 75 | 75 | 85 | 97 | 75 | 75 | 75 | 75 | 95 | 75 |
| | | Acrylonitrile (%) | 25 | 25 | 25 | 25 | 15 | 3 | 25 | 25 | 25 | 25 | 5 | 25 |
| Graft ratio (%) | | | 75 | 50 | 85 | 70 | 75 | 75 | 50 | 50 | 50 | 75 | 75 | 80 |
| Intrinsic viscosity [$\eta$] of component dissolved by acetone (dl/g) | | | 0.50 | 0.50 | 0.80 | 0.80 | 0.50 | 0.50 | 0.20 | 0.50 | 0.50 | 0.44 | 0.45 | 0.50 |

2-1-2. Copolymer (A2)

Production example 1-13

Into a glass flask having an inner volume of 7 liters and equipped with an agitator, 75 parts of styrene, 25 parts of acrylonitrile, 1.5 part of sodium oleate, 0.1 part of tert-dodecyl mercaptan and 300 parts of ion exchanged water were charged and temperature was raised while agitating. When an internal temperature reached 45°C, 0.8 part of potassium peroxosulfate and 0.2 part of acidic sodium sulfite were added and reacted for three hours to obtain a latex in which acrylonitrile·styrene copolymer (A2-1) was contained.

After that, agitating was continued for one hour and added 0.2 part of 2,2'-methylene-bis(4-ethyl-6-tert-butylphenol) into the above latex. Subsequently, 2 parts of sulfuric acid was added to coagulate a polymer component. A resultant coagulant was sufficiently rinsed and dried at 75°C for 24 hours to obtain a white powder. Intrinsic viscosity [η] was 0.45 dl/g (refer to Table 2).

Production examples 1-14 to 1-16

Acrylonitrile·styrene copolymers (A2-2) to (A2-4) were obtained in the same manner as Production example 1-13 except that amounts of styrene and acrylonitrile shown in Table 1 were used. Intrinsic viscosities [η] were also shown in Table 2.

Production example 1-17

Into a glass flask having an inner volume of 7 liters and equipped with an agitator, 250 parts of ion exchanged water was added and 0.50 part of potassium stearate was added as an emulsifier. Then, 32.5 parts of styrene and 12.5 parts of acrylonitrile were added as a monomer component and temperature was raised. 2% aqueous solution containing 0.15 part of potassium persulfate as a polymerization initiator was added at 55°C. After polymerization was performed at 65°C for 2 hours, 32.5 parts of styrene, 12.5 parts of acrylonitrile, 50 parts of ion exchanged water and 0.10 part of potassium persulfate (2% aqueous solution) were wholly added to continue polymerization at 65°C for 3 hours, and a latex containing acrylonitrile-styrene copolymer (A2-5) was obtained.

Subsequently, 2 parts of sulfuric acid was added to the above latex to coagulate a polymer component. A resultant coagulant was sufficiently rinsed and dried at 75°C for 24 hours to obtain a white powder. Intrinsic viscosity [η] was 1.6 dl/g.
Table 2

| | | Copolymer (A2) | | | | |
|---|---|---|---|---|---|---|
| | | A2-1 | A2-2 | A2-3 | A2-4 | A2-5 |
| Vinyl-based monomer (b2) | Styrene (%) | 75 | 85 | 97 | 95 | 75 |
| | Acrylonitrile (%) | 25 | 15 | 3 | 5 | 25 |
| Intrinsic viscosity [η] (dl/g) | | 0.45 | 0.45 | 0.45 | 0.45 | 1.6 |

2-2.Component [B]

Polycarbonate resin "NOVAREX 7022PJ" (trade name) manufactured by Mitsubishi Engineering-Plastics Corp. was used. MFR (at a temperature of 240°C and a load of 10 kg) according to JIS K7210 was 8 g/10min., viscosity-average molecular weight was 22,000 and refractive index was 1.585. It is noted that the resin was indicated to "PC" in Table 3, Table 4, Table 5 and Table 6.

2-3. Component [C]

2-3-1. PETG (C1)

"Easter Copolyester 6763" (trade name) manufactured by Eastman Chemical Company was used.

2-3-2. PCTG (C2)

"Easter PCTG Copolyester 5445" (trade name) manufactured by Eastman Chemical Company was used.

2-3-3. Homo-type PET (C3)

"NOVAPEX GM700" (trade name) manufactured by Mitsubishi Chemical Corp. was used.

2-3-4. Copolymerized PET (C4)

"RN-163" (trade name) manufactured by TOYOBO Co., Ltd. was used.
The above-mentioned components are indicated to "C1", "C2", "C3" and "C4" in Table 4, Table 5 and Table 6.

Experimental Examples 1-1 to 1-11

The above-mentioned components [A] and [B] were charged into a Henschel mixer at a specified amount described in Table 3 and mixed. After that, melting and kneading were performed with a twin-screw extruder (cylinder preset temperature 240°C) to prepare a pellet (thermoplastic resin composition).
Subsequently, the pellet was subjected to a sufficient drying with a dehumidifying drier and a specimen for evaluation was obtained with an injection molding apparatus (cylinder preset temperature 250°C, mold temperature 60°C). This specimen was used for evaluation and results were shown in Table 3.
Table 3

| | | | Example | | | | | | | | | | |
|---|---|---|---|---|---|---|---|---|---|---|---|---|---|
| | | | 1-1 | 1-2 | 1-3 | 1-4 | 1-5 | 1-6 | 1-7 | 1-8 | 1-9 | 1-10 | 1-11 |
| Formulation | [A]Rubber-reinforced resin | | | | | | | | | | | | | |
| | Rubber-reinforced copolymeric resin (A1) | | | | | | | | | | | | | |
| | | Type | A1-1 | A1-2 | A1-3 | A1-8 | A1-9 | A1-7 | A1-2 | A1-12 | – | A1-10 | A1-11 |
| | | Amount        (part) | 10 | 10 | 10 | 10 | 10 | 20 | 10 | 10 | – | 10 | 10 |
| | Copolymer (A2) | | | | | | | | | | | | | |
| | | Type | A2-1 | A2-1 | A2-1 | A2-1 | A2-1 | A2-1 | A2-5 | A2-1 | – | A2-1 | A2-4 |
| | | Amount        (part) | 20 | 20 | 20 | 20 | 20 | 30 | 20 | 20 | – | 20 | 20 |
| | [B]Polycarbonate resin | | | | | | | | | | | | | |
| | | Type | PC | PC | PC | PC | PC | PC | PC | PC | PC | PC | PC |
| | | Amount        (part) | 70 | 70 | 70 | 70 | 70 | 50 | 70 | 70 | 100 | 70 | 70 |
| Evaluation | MFR          (g/10min.) | | 25 | 30 | 29 | 32 | 32 | 45 | 7 | 28 | 8 | 22 | 130 |
| | Izod impact strength      (kgf·cm/cm) | | 45 | 28 | 18 | 22 | 25 | 10 | 32 | 20 | 18 | 35 | 8 |
| | Total light transmittance      (%) | | 45 | 53 | 58 | 54 | 54 | 41 | 53 | 56 | 94 | 26 | 30 |
| | Heat deformation temperature      (°C) | | 121 | 121 | 117 | 121 | 121 | 105 | 121 | 121 | 139 | 118 | 120 |
| | Haze          (%) | | – | 97 | 90 | 93 | – | – | – | 90 | – | 100 | – |

The following is clear based on the results shown in Table 3. Experimental Examples 1-1 to 1-8 had total light transmittance in the range from 41% to 58% and were excellent in translucent. Among these, Experimental Examples 1-2 to 1-5 and 1-8 had total light transmittance in the range from 53% to 58% and were particularly excellent in translucency, and a balance between impact resistance and heat resistance was excellent. On the other hand, Experimental Example 1-9 was an example where only polycarbonate resin was used, fluidity was inferior and transparency was too high. Since each refractive index of the rubbery polymer used for forming the rubber-reinforced copolymeric resin (A1) was 1.515 in Experimental Examples 1-10 and 1-11, total light transmittances of the obtained compositions were 26% and 30%, respectively, being opaque.

Experimental Examples 1-12 to 1-30

The above-mentioned components [A], [B] and [C] were charged into a Henschel mixer at a specified amount described in Tables 4 to 6 and mixed. After that, melting and kneading were performed with a twin-screw extruder (cylinder preset temperature 240°C) to prepare a pellet (thermoplastic resin composition).
Subsequently, the pellet was subjected to a sufficient drying with a dehumidifying drier and a specimen for evaluation was obtained with an injection molding apparatus (cylinder preset temperature 250°C, mold temperature 60°C). This specimen was used for evaluation and results were shown in Tables 4 to 6.
In Tables 4 to 6, each figure in parentheses indicating formulated amount for components [A], [B] and [C] was conversion value (%) based on 100% of total of the components [A] and [B].
## Table 4

| | | | | Example | | | | | | |
| | | | | 1-12 | 1-13 | 1-14 | 1-15 | 1-16 | 1-17 | 1-18 |
|---|---|---|---|---|---|---|---|---|---|---|
| Formulation | [A] Rubber-reinforced resin | | | | | | | | | |
| | | Rubber-reinforced copolymeric resin (A1) | | | | | | | | |
| | | | Type | A1-1 | A1-2 | A1-3 | A1-8 | A1-9 | A1-3 | A1-2 |
| | | | Amount (part) | 10 (11.1) | 10 (11.1) | 10 (11.1) | 10 (11.1) | 10 (11.1) | 10 (12.2) | 10 (11.1) |
| | | Copolymer (A2) | | | | | | | | |
| | | | Type | A2-1 | A2-1 | A2-1 | A2-1 | A2-1 | A2-1 | A2-1 |
| | | | Amount (part) | 10 (11.1) | 10 (11.1) | 10 (11.1) | 10 (11.1) | 10 (11.1) | 2 (2.4) | 30 (33.3) |
| | [B] Polycarbonate resin | | | | | | | | | |
| | | Type | | PC | PC | PC | PC | PC | PC | PC |
| | | Amount (part) | | 70 (77.8) | 70 (77.8) | 70 (77.8) | 70 (77.8) | 70 (77.8) | 70 (85.4) | 50 (55.6) |
| | [C] Polyester-based resin | | | | | | | | | |
| | | Type | | C1 | C1 | C1 | C1 | C1 | C1 | C1 |
| | | Amount (part) | | 10 (11.1) | 10 (11.1) | 10 (11.1) | 10 (11.1) | 10 (11.1) | 18 (22.0) | 10 (11.1) |
| Evaluation | MFR (g/10min.) | | | 28 | 32 | 35 | 36 | 40 | 35 | 35 |
| | Izod impact strength (kgf·cm/cm) | | | 65 | 50 | 23 | 40 | 50 | 23 | 20 |
| | Total light transmittance (%) | | | 41 | 54 | 62 | 55 | 56 | 64 | 50 |
| | Heat deformation temperature (°C) | | | 121 | 121 | 117 | 119 | 119 | 117 | 106 |
| | Haze (%) | | | – | 87 | – | – | – | – | – |
| | MFR holding rate (%) | | | – | 250 | – | – | – | – | – |

Noted that each figure in parentheses is conversion value based on 100% of total of the components [A] and [B].

Table 5

| | | | Example | | | | | | |
|---|---|---|---|---|---|---|---|---|---|
| | | | 1-19 | 1-20 | 1-21 | 1-22 | 1-23 | 1-24 | 1-25 |
| Formulation | [A]Rubber-reinforced resin | | | | | | | | |
| | Rubber-reinforced copolymeric resin (A1) | | | | | | | | |
| | | Type | A1-5 | A1-2 | A1-3 | A1-6 | A1-4 | A1-8 | A1-10 |
| | | Amount (part) | 10 (11.1) | 6 (7.0) | 20 (22.2) | 20 (22.2) | 20 (22.2) | 9.1 (10) | 10 (11.1) |
| | Copolymer (A2) | | | | | | | | |
| | | Type | A2-2 | – | – | A2-3 | – | A2-1 | A2-4 |
| | | Amount (part) | 10 (11.1) | – | – | 20 (22.2) | – | 18.2 (20) | 10 (11.1) |
| | [B]Polycarbonate resin | | | | | | | | |
| | | Type | PC | PC | PC | PC | PC | PC | PC |
| | | Amount (part) | 70 (77.8) | 80 (93.0) | 70 (77.8) | 50 (55.5) | 70 (77.8) | 63.6 (70) | 70 (77.8) |
| | [C]Polyester-based resin | | | | | | | | |
| | | Type | C1 | C1 | C1 | C1 | C2 | C1 | C1 |
| | | Amount (part) | 10 (11.1) | 14 (16.3) | 10 (11.1) | 10 (11.1) | 10 (11.1) | 9.1 (10) | 10 (11.1) |
| Evaluation | MFR (g/10min.) | | 38 | 45 | 49 | 100 | 45 | 40 | 20 |
| | Izod impact strength (kgf·cm/cm) | | 54 | 60 | 42 | 9 | 24 | 30 | 70 |
| | Total light transmittance (%) | | 56 | 58 | 58 | 53 | 65 | 54 | 20 |
| | Heat deformation temperature (°C) | | 119 | 119 | 119 | 100 | 119 | 116 | 117 |

Noted that each figure in parentheses is conversion value based on 100% of total of the components [A] and [B].

## Table 6

| | | | Example | | | | |
|---|---|---|---|---|---|---|---|
| | | | 1-26 | 1-27 | 1-28 | 1-29 | 1-30 |
| 配合処方 | [A] Rubber-reinforced resin | | | | | | |
| | Rubber-reinforced copolymeric resin (A1) | | | | | | |
| | | Type | | A1-2 | A1-12 | A1-12 | A1-12 |
| | | Amount (part) | 10 (11.1) | 10 (11.1) | 10 (11.1) | 10 (11.1) | 10 (11.1) |
| | Copolymer (A2) | | | | | | |
| | | Type | A2-1 | A2-1 | A2-1 | A2-1 | A2-1 |
| | | Amount (part) | 10 (11.1) | 10 (11.1) | 10 (11.1) | 10 (11.1) | 10 (11.1) |
| | [B] Polycarbonate resin | | | | | | |
| | | Type | PC | PC | PC | PC | PC |
| | | Amount (part) | 70 (77.8) | 70 (77.8) | 70 (77.8) | 70 (77.8) | 70 (77.8) |
| | [C] Polyester-based resin | | | | | | |
| | | Type | C3 | C4 | C1 | C3 | C4 |
| | | Amount (part) | 10 (11.1) | 10 (11.1) | 10 (11.1) | 10 (11.1) | 10 (11.1) |
| 評価 | MFR | (g/10min.) | 13 | 12 | 31 | 12 | 11 |
| | Izod impact strength | (kgf·cm/cm) | 56 | 58 | 48 | 55 | 56 |
| | Total light transmittance | (%) | 55 | 56 | 55 | 56 | 56 |
| | Heat deformation temperature | (°C) | 121 | 121 | 120 | 120 | 119 |
| | Haze | (%) | 88 | 88 | 85 | 86 | 86 |
| | MFR holding rate | (%) | 480 | 470 | 250 | 480 | 470 |

Noted that each figure in parentheses is conversion value based on 100% of total of the components [A] and [B].

The following is clear based on the results shown in Table 4, Table 5 and Table 6. Experimental Examples 1-12 to 1-24 and 1-26 to 1-30 had total light transmittance in the range from 41% to 65% and were excellent in translucent. Among these, Experimental Examples 1-12 to 1-21, 1-23 to 1-24, and 1-26 to 1-30 had total light transmittance in the range from 54% to 64% and were particularly excellent in translucency, and a balance between impact resistance and heat resistance was excellent. In addition, Experimental Example 1-13 and 1-28 in which amorphous PETG (C1) was used had smaller MFR holding rate than cases in which crystalline polyester resins (C3) and (C4) were used (Experimental Example 1-26, 1-27, 1-29 and 1-30), being excellent. On the other hand, since refractive index of the rubbery polymer used for forming the rubber-reinforced copolymeric resin (A1) was 1.515 in Experimental Example 1-25, total light transmittance of the obtained composition was 20%, being opaque.

24

3. Production and evaluation of thermoplastic resin composition (II)

Starting materials for the production of the thermoplastic resin composition are as follows.

3-1. Component [A]

3-1-1. Rubber-reinforced copolymeric resin (A1)

Production example 2-1

Into a glass flask having an inner volume of 7 liters and equipped with an agitator, 50 parts (solid content) of styrene·butadiene copolymer (SBR) having a volume-average particle diameter of 0.17 $\mu$m and a styrene unit of 30% as the rubbery polymer (a), 7.5 parts of styrene, 2.5 parts of acrylonitrile, 1.5 parts of sodium disproportionated rosinate, 0.1 part of tert-dodecyl mercaptan and 100 parts of ion exchanged water were charged and temperature was raised while agitating. When an internal temperature reached 45°C, an aqueous activator containing 0.1 part of sodium ethylenediaminetetraacetate, 0.003 part of ferrous sulfate, 0.2 part of sodium formaldehyde sulfoxylate dihydrate and 15 parts of ion exchanged water, and 0.1 part of diisopropylbenzene hydroperoxide were added and reacted for one hour. Then, an incremental polymerization component consisting of 50 parts of ion exchanged water, 1 part of sodium disproportionated rosinate, 0.1 part of tert-dodecyl mercaptan, 0.2 part of diisopropyl hydroperoxide, 30 parts of styrene and 10 parts of acrylonitrile was continuously added to the reaction system over a period of 3 hours and continued polymerization while agitating. After adding the entire amount of the incremental polymerization component, agitating was continued for an additional period of one hour to obtain a latex in which rubber-reinforced copolymeric resin (A1-13) was contained.
Subsequently, 0.2 part of an anti-aging agent of 2,2'-methylene-bis(4-ethyl-6-tert-butylphenol) was added to the reaction system. After that, 2 parts of sulfuric acid was added into the latex containing a resin component to coagulate. A resultant coagulant was sufficiently rinsed and dried at 75°C for 24 hours to obtain a white powder. The polymerization conversion was 97%. Graft ratio was 80%, and intrinsic viscosity [η] of a component dissolved by acetone was 0.50 dl/g (refer to Table 7).

The calculated refractive index of the rubbery polymer (a) used are indicated in Table 7. This refractive index was calculated by the following equation according to that the rubbery polymer (a) is consisting of 30% of styrene unit and 70% of butadiene unit and refractive indexes of polystyrene and polybutadiene are 1.591 and 1.515, respectively.

$$\text{Refractive index} = 1.591 \times 0.3 + 1.515 \times 0.7$$
$$= 1.538$$

Production examples 2-2 to 2-4

Rubber-reinforced copolymeric resins (A1-14) to (A1-16) were obtained similar to Production example 2-1 except using SBR having volume-average particle diameter and styrene unit content shown in Table 7 as the rubbery polymer (a). The graft ratio and the intrinsic viscosity [η] of a component dissolved by acetone are indicated in Table 7.

Production example 2-5

Rubber-reinforced copolymeric resin (A1-17) was obtained similar to Production example 2-1 except using a polybutadiene having volume-average particle diameter shown in Table 7 as the rubbery polymer (a). The graft ratio and the intrinsic viscosity [η] of a component dissolved by acetone are indicated in Table 7.
Table 7

| | | Rubber-reinforced copolymer resin (A1) | | | | |
|---|---|---|---|---|---|---|
| | | A1-13 | A1-14 | A1-15 | A1-16 | A1-17 |
| Rubbery polymer (a) | Type | SBR | SBR | SBR | SBR | BR |
| | Styrene unit (%) | 30 | 10 | 30 | 45 | 0 |
| | Volume-average particle diameter (um) | 0.17 | 0.3 | 0.6 | 0.3 | 0.3 |
| | Refractive index (calculated) | 1.538 | 1.523 | 1.538 | 1.545 | 1.515 |
| Vinyl-based monomer (b) | Styrene (%) | 75 | 75 | 75 | 75 | 75 |
| | Acrylonitrile (%) | 25 | 25 | 25 | 25 | 25 |
| Graft ratio (%) | | 80 | 75 | 50 | 85 | 75 |
| Intrinsic viscosity [η] of component dissolved by acetone (dl/g) | | 0.50 | 0.50 | 0.50 | 0.80 | 0.44 |

3-1-2. Copolymer (A2)

Production example 2-6

Into a glass flask having an inner volume of 7 liters and equipped with an agitator, 75 parts of styrene, 25 parts of acrylonitrile, 1.5 parts of sodium oleate, 0.1 part of tert-dodecyl mercaptan and 300 parts of ion exchanged water were charged and temperature was raised while agitating. When an internal temperature reached 45°C, 0.8 part of potassium peroxosulfate and 0.2 part of acidic sodium sulfite were added and reacted for three hours to obtain a latex in which acrylonitrile·styrene copolymer (A2-1) is contained.
After that, agitating was continued for one hour and added 0.2 part of 2,2'-methylene-bis(4-ethyl-6-tert-butylphenol). Subsequently, 2 parts of sulfuric acid was added into the latex containing the resin component and the like to coagulate. A resultant coagulant was sufficiently rinsed and dried at 75°C for 24 hours to obtain a white powder. Intrinsic viscosity [η] was 0.45 dl/g.

3-2. Component [B]

Polycarbonate resin "NOVAREX 7022PJ" (trade name) manufactured by Mitsubishi Engineering-Plastics Corp. was used. MFR (at a temperature of 240°C and a load of 10 kg) according to JIS K7210 was 8 g/10min., viscosity-average molecular weight was 22,000 and refractive index was 1.585.

3-3. Component [C]

3-3-1. PETG (C1)

"Easter Copolyester 6763" (trade name) manufactured by Eastman Chemical Company was used.

3-3-2. Homo-type PET (C3)

"NOVAPEX GM700" (trade name) manufactured by Mitsubishi Chemical Corp. was used.

3-3-3. Copolymerized PET (C4)

"RN-163" (trade name) manufactured by TOYOBO Co., Ltd. was used.
The above-mentioned components are indicated to "C1", "C3" and "C4" in Tables 9 and 10.

3-4. Component [D]

"ADEKASTAB AX-71" (trade name) which is a mixture of octadecyl dihydrogenphosphate and dioctadecyl phosphate manufactured by Adeka Corporation was used.

Experimental Examples 2-1 to 2-10

The above-mentioned components [A], [B] and [D] were charged into a Henschel mixer at a specified amount described in Table 8 and mixed. After that, melting and kneading were performed with a twin-screw extruder (cylinder preset temperature 240°C) to prepare a pellet (thermoplastic resin composition).
Subsequently, the pellet was subjected to a sufficient drying with a dehumidifying drier and a specimen for evaluation was obtained with an injection molding apparatus (cylinder preset temperature 250°C, mold temperature 60°C). This specimen was used for evaluation and results were shown in Table 8.
## Table 8

| | | Example |
|---|---|---|

| | | | 2-1 | 2-2 | 2-3 | 2-4 | 2-5 | 2-6 | 2-7 | 2-8 | 2-9 | 2-10 |
|---|---|---|---|---|---|---|---|---|---|---|---|---|
| Formulation | [A] Rubber-reinforced resin | Rubber-reinforced copolymeric resin (A1) Type | A1-13 | A1-13 | A1-14 | A1-15 | A1-16 | A1-13 | A1-13 | - | A1-13 | A1-17 |
| | | Amount (part) | 10 | 10 | 10 | 10 | 10 | 10 | 10 | - | 10 | 10 |
| | | Copolymer (A2) Type | A2-1 | A2-1 | A2-1 | A2-1 | A2-1 | - | A2-1 | - | A2-1 | A2-1 |
| | | Amount (part) | 20 | 10 | 20 | 20 | 20 | - | 20 | - | 20 | 20 |
| | [B] Polycarbonate resin | Amount (part) | 70 | 80 | 70 | 70 | 70 | 90 | 70 | 100 | 70 | 70 |
| | [D] Phosphoric compound | Amount (part) | 0.1 | 0.1 | 0.1 | 0.1 | 0.1 | 0.1 | 0.3 | 0.1 | - | 0.1 |
| Evaluation | MFR (g/10min.) | | 23 | 18 | 21 | 25 | 30 | 10 | 22 | 8 | 25 | 17 |
| | Izod impact strength (kgf·cm/cm) | | 52 | 57 | 48 | 55 | 25 | 67 | 53 | 18 | 45 | 60 |
| | Total light transmittance (%) | | 46 | 55 | 39 | 49 | 52 | 45 | 46 | 94 | 45 | 10 |
| | Haze (%) | | 100 | 100 | 100 | 100 | 100 | - | - | 3 | - | - |
| | Heat deformation temperature (°C) | | 121 | 120 | 121 | 120 | 121 | 130 | 121 | 139 | 121 | 118 |
| | Holding rate of drop hammer strength after residence (%) | | 92 | - | - | - | - | - | - | - | 82 | - |
| | ΔE after residence | | 4 | 4 | 4 | - | - | - | 4 | - | 8 | - |

Experimental Examples 2-11 to 2-23

The above-mentioned components [A], [B], [C] and [D] were charged into a Henschel mixer at a specified amount described in Tables 9 and 10 to mix. After that, melting and kneading were performed with a twin-screw extruder (cylinder preset temperature 240°C) to prepare a pellet (thermoplastic resin composition).
Subsequently, the pellet was subjected to a sufficient drying with a dehumidifying drier and a specimen for evaluation was obtained with an injection molding apparatus (cylinder preset temperature 250°C, mold temperature 60°C). This specimen was used for evaluation and results were shown in Tables 9 and 10.
## Table 9

| | | | Experimantal Example | | | | | | | |
|---|---|---|---|---|---|---|---|---|---|---|
| | | | 2-11 | 2-12 | 2-13 | 2-14 | 2-15 | 2-16 | 2-17 | 2-18 |
| Formulation | [A] Rubber-reinforced resin | | | | | | | | | | |
| | Rubber-reinforced copolymeric resin (A1) | | | | | | | | | | |
| | | Type | A1-13 | A1-14 | A1-15 | A1-16 | A1-13 | A1-13 | A1-13 | A1-13 |
| | | Amount (part) | 10 | 10 | 10 | 10 | 10 | 10 | 10 | 10 |
| | Copolymer (A2) | | | | | | | | | | |
| | | Type | A2-1 | A2-1 | A2-1 | A2-1 | A2-1 | A2-1 | A2-1 | A2-1 |
| | | Amount (part) | 10 | 10 | 10 | 10 | 10 | 10 | 10 | 10 |
| | [B] Polycarbonate resin | | | | | | | | | | |
| | Amount (part) | | 80 | 80 | 80 | 80 | 80 | 80 | 80 | 80 |
| | [C] Polyester-based resin | | | | | | | | | | |
| | | Type | C1 | C1 | C1 | C1 | C1 | C1 | C3 | C4 |
| | | Amount (part) | 10 | 10 | 10 | 10 | 20 | 45 | 10 | 10 |
| | [D] Phosphoric compound | | | | | | | | | | |
| | Amount (part) | | 0.1 | 0.1 | 0.1 | 0.1 | 0.3 | 0.3 | 0.1 | 0.1 |
| Evaluation | MFR (g/10min.) | | 15 | 12 | 15 | 18 | 13 | 8 | 5 | 6 |
| | Izod impact strength (kgf·cm/cm) | | 65 | 70 | 80 | 55 | 66 | 105 | 74 | 75 |
| | Total light transmittance (%) | | 53 | 45 | 55 | 60 | 54 | 51 | 55 | 55 |
| | Haze (%) | | 83 | 88 | 92 | 81 | 79 | 81 | 82 | 83 |
| | Heat deformation temperature (°C) | | 120 | 121 | 119 | 121 | 121 | 115 | 121 | 120 |
| | Holding rate of MFR after residence (%) | | 250 | – | – | – | – | 270 | 480 | 470 |
| | Holding rate of drop hammer strength after residence (%) | | 95 | – | – | – | – | – | – | – |
| | ΔE after residence | | 3 | 3 | 3 | 3 | 3 | 4 | 3 | 3 |

EP 1 876 206 A1

## Table 10

| | | | Example | | | | |
|---|---|---|---|---|---|---|---|
| | | | 2-19 | 2-20 | 2-21 | 2-22 | 2-23 |
| Formulation | [A] Rubber-reinforced resin | | | | | | |
| | Rubber-reinforced copolymeric resin (A1) | | | | | | |
| | | Type | A1-13 | A1-13 | A1-13 | A1-13 | – |
| | | Amount (part) | 10 | 10 | 10 | 10 | – |
| | Copolymer (A2) | | | | | | |
| | | Type | – | A2-1 | A2-1 | A2-1 | – |
| | | Amount (part) | – | 20 | 10 | 10 | – |
| | [B] Polycarbonate resin | | | | | | |
| | Amount (part) | | 90 | 70 | 80 | 80 | 100 |
| | [C] Polyester-based resin | | | | | | |
| | Type | | C1 | C1 | – | C1 | C1 |
| | Amount (part) | | 10 | 10 | – | 10 | 10 |
| | [D] Phosphoric compound | | | | | | |
| | Amount (part) | | 0.1 | 0.1 | – | – | 0.1 |
| Evaluation | MFR (g/10min.) | | 13 | 22 | 20 | 45 | 15 |
| | Izod impact strength (kgf·cm/cm) | | 67 | 58 | 52 | 60 | 17 |
| | Total light transmittance (%) | | 55 | 51 | 54 | 55 | 60 |
| | Haze (%) | | 81 | 85 | 100 | 84 | 72 |
| | Heat deformation temperature (°C) | | 121 | 118 | 120 | 118 | 130 |
| | Holding rate of MFR after residence (%) | | – | – | 230 | – | – |
| | Holding rate of drop hammer strength after residence (%) | | – | – | – | 78 | – |
| | ΔE after residence | | 3 | 2 | 13 | 10 | – |

Based on Table 8, Table 9 and Table 10, the following contents are clear. That is, Experimental Example 2-8 was an example where only polycarbonate resin was used, heat resistance was excellent, but fluidity, impact resistance and translucency were inferior. Experimental Example 2-9 was an example where the component [D] was not contained, thermal stability (ΔE after residence) during molding was inferior, and MFR and impact resistance were not sufficient. Additionally, Experimental Example 2-10 was an example where a rubbery polymer whose refractive index was out of range of the present invention, it was opaque exceeding translucence, being not preferable.

On the other hand, all of Experimental Examples 2-1 to 2-7 were excellent in translucency, impact resistance and heat resistance. In particular, Experimental Example 2-1 was an example wherein the component [D] was formulated into the composition of Experimental Example 2-9, ΔE after residence was improved from 8 to 4, MFR from 25 g/10 min. to 23 g/10 min., and Izod impact strength from 45 kgf·cm/cm to 52 kgf·cm/cm. In addition, Experimental Example 2-2 was an example wherein the component [D] was formulated into the composition of Experimental Example 2-21, ΔE after residence was improved from 13 to 4, MFR from 20 g/10 min. to 18 g/10 min., and Izod impact strength from 52 kgf·cm/cm to 57 kgf·cm/cm.

Experimental Example 2-11 was an example wherein the component [D] was formulated into the composition of Experimental Example 2-22, ΔE after residence was improved (10 -> 3), and Izod impact strength from 60 kgf·cm/cm to 65 kgf·cm/cm. In addition, the holding rate of drop hammer strength after residence was improved from 78% to 95%. Further, all of Experimental Examples 2-12 to 2-20 were excellent in translucency, impact resistance and heat resistance. Experimental Examples 2-11 and 2-20 wherein types and contents of the components [A], [B] and [D] were the same and the component [C] was further comprised were more excellent in translucency and impact resistance than Experimental Examples 2-2 and 2-1, respectively.

Additionally, in Experimental Examples 2-11, 2-17 and 2-18 wherein types and contents of the components [A], [B] and [D] were the same and type of the component [C] was varied, Experimental Example 2-11 had smaller holding rate of MFR after wet heat test than Experimental Examples 2-17 and 2-18 wherein crystalline polyester resin (C2 and C3) were used, and stability of moist heat resistance of the composition was also excellent.

[Industrial Applicability]

The thermoplastic resin composition of the present invention is excellent in translucency, impact resistance, heat resistance and fluidity. Accordingly, the composition is suitable for a lighting system including a lamp or the like, a display unit including a switch or the like, a case, a housing, a tray, a disc and the like of OA equipments, home electric appliances, parts of a motor vehicle and the like. It is particularly suitable for a molding material used for realizing "illumination", a molding material for forming a surface part of a molded article having multilayers, such as two-color molded article, and the like.

**Claims**

1.  A thermoplastic resin composition **characterized by** comprising:

    [A] rubber-reinforced resin consisting of a rubber-reinforced copolymeric resin (A1) which is obtained by polymerization of a vinyl-based monomer (b) including an aromatic vinyl compound in the presence of a rubbery polymer (a) having a refractive index in the range from 1.520 to 1.580, or a mixture of said rubber-reinforced copolymeric resin (A1) and a (co)polymer (A2) of a vinyl-based monomer (b); and
    [B] polycarbonate resin;

    wherein contents of said rubber-reinforced resin [A] and said polycarbonate resin [B] based on 100% by mass of the total amount of these resins are in the range from 5% to 60% by mass and in the range from 40% to 95% by mass, respectively.

2.  The thermoplastic resin composition according to Claim 1,
    wherein said rubbery polymer (a) is a styrene·butadiene-based copolymer.

3.  The thermoplastic resin composition according to Claim 2,
    wherein content of a styrene unit constituting said styrene·butadiene-based copolymer is in the range from 10% to 80% by mass based on 100% by mass of the total monomer units.

4.  The thermoplastic resin composition according to Claim 2,
    wherein content of a styrene unit constituting said styrene·butadiene-based copolymer is more than 30% by mass and 80% or less by mass based on 100% by mass of the total monomer units.

5.  The thermoplastic resin composition according to Claim 1, further comprising a phosphoric compound and content of said phosphoric compound is in the range from 0.01 to 5 parts by mass based on 100 parts by mass of the total of said rubber-reinforced resin [A] and said polycarbonate resin [B].

6.  The thermoplastic resin composition according to Claim 5,
    wherein said phosphoric compound is an organic phosphoric compound represented by the following formula.

    $$O=P(OR)_s(OH)_{3-s}$$

    (In the formula, each R is independently a hydrocarbon group having carbon atoms of 1 to 30 and s is 1 or 2.)

7.  The thermoplastic resin composition according to Claim 1, further comprising [C] polyester resin and content of said polyester resin [C] is in the range from 1 to 40 parts by mass based on 100 parts by mass of the total of said rubber-reinforced resin [A] and said polycarbonate resin [B].

8. The thermoplastic resin composition according to Claim 7,
wherein said polyester resin [C] is an amorphous polyester resin.

9. The thermoplastic resin composition according to Claim 8,
wherein said amorphous polyester resin is a condensate of a dicarboxylate and a diol containing an alkylene glycol
having carbon atoms of 2 to 12 and an alicyclic diol.

10. The thermoplastic resin composition according to Claim 9,
wherein said alkylene glycol is ethyleneglycol and said alicyclic diol is 1,4-cyclohexane dimethanol.

11. The thermoplastic resin composition according to Claim 7, further comprising a phosphoric compound and content
of said phosphoric compound is in the range from 0.01 to 5 parts by mass based on 100 parts by mass of the total
of said rubber-reinforced resin [A] and said polycarbonate resin [B].

12. The thermoplastic resin composition according to Claim 11,
wherein said phosphoric compound is an organic phosphoric compound represented by the following formula.

$$O=P(OR)_s(OH)_{3-s}$$

(In the formula, each R is independently a hydrocarbon group having carbon atoms of 1 to 30 and s is 1 or 2.)

13. A molded article **characterized by** comprising said thermoplastic resin composition according to Claim 1.

14. The molded article according to Claim 13,
wherein said thermoplastic resin composition further comprises a phosphoric compound, and
wherein content of said phosphoric compound is in the range from 0.01 to 5 parts by mass based on 100 parts by
mass of the total of said rubber-reinforced resin [A] and said polycarbonate resin [B].

15. The molded article according to Claim 13,
wherein said thermoplastic resin composition further comprises [C] polyester resin, and
wherein content of said polyester resin [C] is in the range from 1 to 40 parts by mass based on 100 parts by mass
of the total of said rubber-reinforced resin [A] and said polycarbonate resin [B].

16. The molded article according to Claim 15,
wherein said thermoplastic resin composition further comprises a phosphoric compound, and
wherein content of said phosphoric compound is in the range from 0.01 to 5 parts by mass based on 100 parts by
mass of the total of said rubber-reinforced resin [A] and said polycarbonate resin [B].

**INTERNATIONAL SEARCH REPORT**

| International application No. |
|---|
| PCT/JP2006/307975 |

A. CLASSIFICATION OF SUBJECT MATTER
*C08L69/00*(2006.01), *C08L51/04*(2006.01), *C08L67/02*(2006.01), *C08K5/521*
(2006.01)

According to International Patent Classification (IPC) or to both national classification and IPC

B. FIELDS SEARCHED

Minimum documentation searched (classification system followed by classification symbols)
C08K5/521, C08L51/04, C08L67/02, C08L69/00

Documentation searched other than minimum documentation to the extent that such documents are included in the fields searched
Jitsuyo Shinan Koho          1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-514011 A  (General Electric Co.), 13 May, 2004 (13.05.04), Claims; Par. Nos. [0057] to [0064], [0069] to [0076] & WO 2002/038675 A2    & US 2002/0111428 A1 & EP 1339797 A2 | 1-16 |
| Y | JP 2003-176401 A  (GE Plastics Japan Ltd.), 24 June, 2003 (24.06.03), Claims; Par. Nos. [0038] to [0039], [0041] & US 2003/0149190 A1    & EP 1318416 A1 | 1-16 |
| Y | JP 2004-521968 A  (General Electric Co.), 22 July, 2004 (22.07.04), Claims; Par. Nos. [0020] to [0022], [0024] to [0046] & WO 2002/032999 A2    & EP 1337586 A2 | 1-16 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 May, 2006 (19.05.06) | 30 May, 2006 (30.05.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/307975

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2003-313392 A  (Mitsubishi Rayon Co., Ltd.), 06 November, 2003 (06.11.03), Claims; full text & WO 2003/016399 A1    & EP 1445281 A1 & US 2004/0249069 A1 | 1-16 |
| A | JP 2002-003548 A  (Techno Polymer Co., Ltd.), 09 January, 2002 (09.01.02), Claims; full text & US 6448342 B2 | 1-16 |
| A | JP 11-310694 A  (Techno Polymer Co., Ltd.), 09 November, 1999 (09.11.99), Claims; full text & EP 0953604 A2 | 1-16 |

Form PCT/ISA/210 (continuation of second sheet) (April 2005)

**EP 1 876 206 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S3815225 B
- JP 2004521968 A
- JP S61233010 A
- JP S5993701 A
- JP S56167704 A
- JP H09509449 A